# EUROPÄISCHE PATENTSCHRIFT

(11) **EP 1 802 639 B1**
(45) Veröffentlichungstag und Bekanntmachung des Hinweises auf die Patenterteilung: **12.03.2008**
(21) Anmeldenummer: 06754408.0
(22) Anmeldetag: 16.06.2006
(51) Int. Cl.: C07F 5/06, C09C 1/40, C09C 3/08, C09C 3/10, C09C 3/12, C07C 57/145, C07C 51/41, C08K 3/10

(54) **METALLORGANISCHES NANOPULVER**
ORGANOMETALLIC NANOPOWDER
NANOPOUDRE ORGANOMETALLIQUE

(30) Priorität: 08.07.2005 DE 102005032353
(43) Veröffentlichungstag der Anmeldung: 04.07.2007
(73) Patentinhaber: Institut für Oberflächenmodifizierung e.V., 04318 Leipzig (DE)
(72) Erfinder: GLÄSEL, Hans-Jürgen, Leipzig 04229 (DE); MEHNERT, Reiner, 04416 Markkleeberg (DE); HARTMANN, Eberhard, 04509 Krostitz OT Priester (DE)
(74) Vertreter: Müller, Volkmar
(86) Internationale Anmeldenummer: PCT/EP2006/005803
(87) Internationale Veröffentlichungsnummer: WO 2007/006392

(56) Entgegenhaltungen:
- DE-B3-3102005 032 35
- DE-U1-2202005 014 33
- US-B1- 6 369 183

## Beschreibung

Die Erfindung betrifft ein metallorganisches Nanopulver mit der Zusammensetzung

**MeᵢOⱼ(OH)ₖ[(OOC)ₗ-Rₘ]ₙ**

mit i=1-20, j=0-40, k=0-80, l=1-80, m=1-80, n=1-80;
wobei die Metallatome Me den ersten fünf Hauptgruppen, den acht Nebengruppen oder den Lanthanoiden entstammen, R Wasserstoffatome und/oder beliebige organische Reste sind und diese Wasserstoffatome und/oder diese organischen Reste miteinander kombinierbar sind.
Besonders bevorzugt sind Metallatome Me, die aufgrund ihres Vorkommens kostengünstig sind und keine bzw. nur geringe Toxizität aufweisen (wie z.B. Al).

Ein solches Nanopulver ist in der US 6,369,183 grundsätzlich beschrieben. Offenbart wird dort eine polymere Zusammensetzung, welche ein Reaktionsprodukt eines Carboxylat-Alumoxanes und einem reaktiven organischen Substrat enthält, und deren Herstellungsverfahren.

Im Patent EP 1 123 354 (weiter P1 genannt) werden oxidische Nanopartikel (z.B. und vornehmlich SiO₂) mit funktionalisierten (polymerisationsaktiven) Alkoxysilanen *in situ* in Bindemitteln (z.B. und vornehmlich in Acrylaten) in einer heterogenen hydrolytischen Kondensation silanisiert und somit organophiliert. Dadurch fallen in einem Schritt stabile und lagerbeständige Nanodispersionen an. Nach der Aushärtung (z.B. und vornehmlich Strahlenhärtung) werden heterogene copolymere Nanokomposite, z.B. und vornehmlich von sehr guter Kratz- und Abriebfestigkeit, erhalten. Nachteilig ist zum einen die zwangsläufige Bildung von Alkoholen durch Hydrolyse und insbesondere der Anfall von hochtoxischen Alkylacrylaten in einer Umesterungsreaktion, was aufwändige Reinigungsprozesse erforderlich macht. Zusätzlich werden trotz der Reinigungsprozesse in Folgereaktionen bei Lagerung unter Normalbedingungen laufend Alkohol und Alkylacrylat nachgebildet. Des Weiteren weisen die Nanodispersionen generell ein ungünstiges rheologisches Verhalten (z.B. und vornehmlich Dilatanz) auf.

Eine Anwendung der Lösung von P1 ist in der EP 1 119 589 (weiter P2 genannt) beschrieben.

In der DE 101 16 207.3 (weiter P3 genannt) werden, in Anlehnung an P1, hochgefüllte pastöse Nanopasten (z.B. und vornehmlich SiO₂ in Acrylaten) beschrieben, die nach sehr einfacher Abdünnung mit Bindemitteln (z.B. und vornehmlich niedrigviskose Reaktivverdünner) applizierbare Nanodispersionen ergeben. Das Alkohol/Alkylacrylat-Problem besteht jedoch weiterhin und generell ist auch hier ein temperierbarer Auftrag notwendig. Ein stark ausgeprägter synergetischer Effekt (z.B. und vornehmlich hinsichtlich Abriebfestigkeit) wird in den gehärteten Beschichtungen durch zusätzliches Vorliegen von Mikropartikeln in Nano/Mikro-Hybridkompositen (z.B. und vornehmlich SiO₂/Mikrokorund-Komposite) erzielt.

In der DE 101 16 201.4 (weiter P4 genannt) werden in Anlehnung an P3 -Nano/Mikro-Hybriddispersionen (z.B. und vornehmlich SiO₂/Mikrokorund) mit von vornherein geringerer Viskosität und die entsprechenden gehärteten Komposite beschrieben.

In der EP 115 3090 (weiter P5 genannt) werden oxidische Nanopartikel (z.B. und vornehmlich SiO₂) mit Aminoalkoxysilanen in einer kombinierten heterogenen hydrolytischen Kondensation und Michael-Addition vor der Aushärtung kovalent in dem Bindemittel eingebunden. Dabei ein nur geringer Anteil von Aminoalkoxysilanen erforderlich, dies relativiert das Alkohol/Alkylacrylat-Problem sehr wesentlich. Die problematische Rheologie ist jedoch in Analogie zu P1 auch gegeben. Die oberflächenmechanischen Eigenschaften der gehärteten Nanokomposite sind vergleichbar zu P1.

In der EP 1448724 (weiter P6 genannt) werden oxidische Nanopartikel (z.B. und vornehmlich SiO₂) *in situ* in Bindemitteln (z.B. und vornehmlich in Acrylaten) mit geringen Mengen an grenzflächenaktiven Verbindungen (z.B. und vornehmlich funktionalisierte Polysiloxane) adsorptiv belegt und somit ohne jegliche chemische Reaktion organophiliert. Dadurch entfällt das Alkohol/Alkylacrylat-Problem. Die problematische Rheologie ist jedoch in Analogie zu P1 weiterhin gegeben. Ein zusätzlicher Nachteil ist die hohe Sensitivität der Nanodispersionen gegenüber grenzflächenaktiven Verunreinigungen (z.B. Tensiden), wodurch schnell Gelierung auftreten kann. Die oberflächenmechanischen Eigenschaften der gehärteten Nanokomposite sind vergleichbar zu P1.

In der US 6,369,183 (weiter P7 genannt) werden Carboxylat-Alumoxane (z.B. und vornehmlich mit polymerisationsaktiven Gruppen) in polymerisationsaktive Substrate (z.B. und vornehmlich mit zum Carboxylat-Alumoxan gegenreaktiven funktionellen Gruppen) eindispergiert und z.B. und vornehmlich thermisch unter Verwendung von Härtungsbeschleunigern ausgehärtet. Dabei werden vornehmlich Nanodispersionen hydroxy-funktioneller Carboxylat-Alumoxane in Epoxidharzen eingesetzt. Die ausgehärteten Nanokomposite weisen gegenüber den entsprechenden unmodifizierten polymeren Substraten insbesondere eine stark ausgeprägte Verbesserung der Biegebruchfestigkeit auf, der Beeinflussung anderer viskoelastischer oder oberflächenmechanischer Kenngrößen durch Füllung polymerer Matrices mit Carboxylat-Alumoxanen wird dagegen kaum Aufmerksamkeit gewidmet. Lediglich im dortigen Beispiel 15 ist ein nicht quantifizierbarer Kratztest (Münzen-, Messer-Ritzen) aufgeführt.

Aufgabe der Erfindung ist es, ein metallorganisches Nanopulver, eine dieses Pulver enthaltende metallorganische Nanodispersion und ein polymeres Nanokomposit bereit zu stellen, die verbesserte rheologische Eigenschaften (Nanodispersion) und oberflächenmechanische Eigenschaften (Nanokomposit) aufweisen. Das Nanopulver, die Nanodispersion und das Nanokomposit sollen sich in der industriellen Massenproduktion effektiv herstellen lassen.

Weiterhin ist es Aufgabe der Erfindung ein Verfahren zur Herstellung eines solchen metallorganischen Nanopulvers, ein Verfahren zur Herstellung einer diesbezüglichen metallorganischen Nanodispersion und ein Verfahren zur Herstellung eines polymeren Komposites zu offenbaren.

Die Aufgabe der Erfindung bezüglich eines solchen metallorganischen Nanopulvers wird durch die Merkmale des Anspruch 1 gelöst.

Erfindungswesentlich ist, dass im Partikelkern und an der Partikeloberfläche des Nanopulvers Liganden (OOC)ₗ-Rₘ vorhanden sind und im Partikelkern und an der Partikeloberfläche das Molverhältnis Me : (OOC)ₗ-Rₘ) im Bereich von 20 : 1 bis 1 : 4 liegt. Diese neue Zusammensetzung des metallorganischen Nanopulvers führt zu signifikanten Unterschieden im rheologischen Verhalten der Nanodispersionen im Vergleich zum Stand der Technik.

Der strukturelle Unterschied zwischen dem erfindungsgemäßen Nanopulver und den in den P1 bis P6 beschriebenen Nanopulvern ist offensichtlich: Selbst wenn man das vornehmlich beschriebene SiO₂ ausklammert und Metalloxide einsetzt, sind diese kovalent (P1-P5) bzw. adsorptiv (P6) an der Oberfläche mit Polysiloxan umhüllt.
In den erfindungsgemäßen Partikeln sind die Metall(Aluminium)-Ionen dagegen sowohl an der Oberfläche als auch im Partikelkern mit Carboxylat-Anionen koordinativ verknüpft.

Der strukturelle Unterschied zwischen dem erfindungsgemäßen Nanopulver und dem in der P7 beschriebenen Nanopulver ist ebenfalls offensichtlich signifikant:
1. Das nach Beispiel 1 hergestellte Nanopulver ist laut XRD-Befunden amorph, das Vergleichsprodukt nach P7 (Beispiel 2) ist dagegen kristallin (Böhmit-Struktur). Auch alle anderen in der P7 beschriebenen Carboxylat-Alumoxane zeigen diese kristalline Böhmit- bzw. Pseudo-Böhmit-Struktur.
2. Im Beispiel 1 sind die Aluminiumionen intrinsisch (sowohl an der Oberfläche als auch im Partikelkern) mit den Carboxylat-Anionen koordinativ verknüpft. Beim Vergleichsprodukt nach P7 (Beispiel 2) ist das dagegen nur an der Teilchenoberfläche der Fall. Auch alle anderen in der P7 beschriebenen Carboxylat-Alumoxane zeigen diesen abweichenden Aufbau.

Die Unteransprüche 2 bis 4 zeigen vorteilhafte Ausgestaltungen der Erfindung auf, ohne diese abschließend zu beschreiben.

Es ist außerdem bevorzugt, dass die mittlere Primärteilchengröße der Partikel im Bereich von ca. 1 bis 300 nm liegt.
Damit wird erreicht, dass die oberflächenmechanischen Eigenschaften der ausgehärteten Kompositbeschichtungen, wie z.B. Kratz- und Abriebfestigkeit, im Vergleich zu den in P1-P7 beschriebenen Systemen weiter verbessert und optimiert werden und die Beschichtungen (Primärteilchengröße vorzugsweise unter 50 nm) optisch transparent sind.

Bevorzugt ist weiterhin, dass das Nanopulver die Struktur Me₂(OH)₄[OOC-R-COO] mit Me = Al und R = CH=CH bei gegebener Z-Konfiguration der Carboxylat-Gruppen besitzt.
Damit wird erreicht, dass die rheologischen Eigenschaften der Nanodispersionen und die oberflächenmechanischen Eigenschaften (insbesondere Kratz- und Abriebfestigkeit) der ausgehärteten Kompositbeschichtungen, beispielsweise auf Acrylat-, Epoxid- und Epoxid/Polyol-Basis, optimiert werden.

Die Aufgabe der Erfindung wird außerdem durch eine Nanodispersion gemäß den Merkmalen des Anspruchs 5 gelöst.

Erfindungswesentlich ist, dass diese zumindest ein Nanopulver gemäß der Ansprüche 1 bis 4 und reaktive organische Matrices enthält.

Eine Nanodispersion im Sinne der Erfindung ist flüssig und enthält zumindest ein Nanopulver und nicht gehärtete organische Matrices. Ein polymeres Komposit ist diesbezüglich insbesondere eine gehärtete Nanodispersion.

Im Sinne der Erfindung bezieht sich die Verwendung des Begriffes reaktiv insbesondere auf Polymerisation und/oder Polyaddition und/ oder Polykondensation.

Die Aufgabe der Erfindung wird außerdem durch ein polymeres Komposit gemäß den Merkmalen des Anspruchs 6 gelöst.

Ein polymeres Komposit im Sinne der Erfindung beschreibt ein Gemisch, welches neben Nanopulver weitere Komponenten enthält, die durch die Polymerisation und/oder Polyaddition und/oder Polykondensation reaktiver Matrices erzeugt werden. Reaktive Matrices im Sinne der Erfindung sind z.B. Acrylate, Epoxide, Epoxid/Polyol-, Epoxid/Amin-, Isocyanat/Polyol- und Isocyanat/Amin-Zweikomponenten (2K)-Systeme.
Zum anderen werden beispielsweise organofunktionelle Silane zur Oberflächenmodifizierung der Nanopulver unter Ausbildung einer Polysiloxanhülle mit Si-O-Si(Al)-Bindungen, Mikropulver zur weiteren Verbesserung der oberflächenmechanischen Eigenschaften, Stabilisatoren, Netzmittel sowie Mattierungsmittel eingesetzt.

Die Eindispergierung der nanoskaligen metallorganischen Füllstoffe in monomere/oligomere Matrices (z.B. Acrylate) führt aufgrund ihrer nach Präparation gegebenen Organophilie selbst bei hohen Füllgraden zu Nanodispersionen mit zumeist Newton'schem rheologischen Verhalten.

Dabei kann die Rheologie durch einfache Variation der organischen Matrices einem konventionellen Auftrag bei Raumtemperatur (z.B. Walzen, Tauchen, Spritzen) optimal angepasst werden, was ihr Anwendungspotenzial stark erhöht.

Die Unteransprüche 7 bis 9 zeigen vorteilhafte Ausgestaltungen der Erfindung auf, ohne diese abschließend zu beschreiben.

Bevorzugt ist, dass das Komposit 1 bis 80 Ma.% an metallorganischem Nanopulver gemäß der Ansprüche 1 bis 4 enthält. Damit wird erreicht, dass z.B. oberflächenmechanische Eigenschaften der ausgehärteten Kompositbeschichtung, insbesondere die Abriebfestigkeit, im Vergleich zur ungefüllten organischen Matrix um mindestens einen Faktor 4 verbessert werden.

Bevorzugt ist, dass das Komposit zusätzlich 1 bis 80 Ma.% an anorganischen Mikropartikeln mit einer mittleren Teilchengröße der Partikel von 1-2000 µm enthält.
Damit wird erreicht, dass z.B. oberflächenmechanische Eigenschaften der ausgehärteten Kompositbeschichtung, insbesondere die Abriebfestigkeit, im Vergleich zum reinen Nanokomposit um mindestens eine weitere Größenordnung verbessert werden.

Es ist im Sinne der Erfindung außerdem bevorzugt, dass das Komposit durch Einwirkung von Elektronen, von γ- oder Röntgenstrahlung, von mechanischer Energie, durch UV-Strahlung oder sichtbarem Licht unter zusätzlichen Einsatz von radikalischen und/oder ionischen Photoinitiatoren, oder von thermischer Energie, besonders bevorzugt unter zusätzlichem Einsatz von radikalischen Thermoinitiatoren und/oder Katalysatoren erhalten wird.
Damit wird erreicht, dass maßgeschneiderte polymere Kompositbeschichtungen mit optimalen (z.B. oberflächenmechanischen) Eigenschaften in allen relevanten Anwendungsfeldern zur Verfügung stehen.

Weiterhin wird die Aufgabe der Erfindung durch ein Verfahren zur Herstellung eines erfindungsgemäßen Nanopulvers gemäß den Merkmalen des Anspruchs 10 gelöst.

Der Unterschied zwischen den erfindungsgemäßen Partikelpräparationsverfahren und den diesbezüglichen Verfahren gemäß P1 bis P6 ist offensichtlich:
Im Falle des erfindungsgemäßen Verfahrens werden Metallcarboxylat-Nanoteilchen (i) in Fällungsreaktionen aus Metallalkoholat-Lösungen mit Carbonsäuren, (ii) durch doppelte Umsetzung zwischen Metallsalzen und Carbonsäuresalzen oder (iii) aus einer Verdrängungsreaktion zwischen Metallsalzen schwächerer und/oder leichter flüchtigen Carbonsäuren (z.B. Metallacetate) und stärkeren und/oder weniger flüchtigen Carbonsäuren gewonnen.

Besonders bevorzugt ist die Variante in Fällungsreaktionen aus Metallalkoholat-Lösungen mit Carbonsäuren.
Selbst wenn man das in P1-P6 vornehmlich beschriebene pyrogen hergestellte SiO₂ ausklammert und modifizierte Metalloxid-Nanoteilchen in Anlehnung an (i), (ii) und (iii) herstellen würde, so würden in keinem Falle Carbonsäuren als Modifizierungs-Reaktand eingesetzt.

Der Unterschied im erfindungsgemäßen Partikelpräparationsverfahren zum Verfahren gemäß P7 ist offensichtlich: Im Rahmen der Erfindung werden die Metallcarboxylat-Nanoteilchen nach (i), (ii) und (iii) in einem Einstufen-Verfahren mit kurzen Reaktionszeiten (typisch ca. 2 Stunden) präpariert.
Im Falle von P7 wird im Unterschied zur erfindungsgemäßen Partikelpräparation in einem vorgeschalteten Schritt nanoskaliges Böhmit oder Pseudo-Böhmit erzeugt. Erst in einer zweiten Synthesestufe erfolgt die Bildung von Metallcarboxylat-Nanoteilchen durch Umsetzung der nanoskaligen Oxide mit Carbonsäuren bei langen Reaktionszeiten (typisch ca. 12 Stunden).

Durch nachfolgende Aushärtung der Nanodispersion wird ein polymeres Nanokomposit erhalten, welches hervorragende oberflächenmechanische und viskoelastische Eigenschaften besitzt, die den Stand der Technik deutlich übertreffen. So erhöhen sich beispielsweise E'-Modul, Martenshärte, Diamant-Ritzhärte und Abriebfestigkeit der gehärteten metallorganischen Nano- und Nano/Mikro-Komposite gegenüber den entsprechenden SiO₂- und insbesondere im Vergleich zu den Carboxylat-Alumoxan - Systemen (wie beispielsweise gemäß P7) signifikant.

Weiterhin wird ermöglicht, dass z.B. Spritzapplikationen und Walzenbeschichtungen der Nano- und Nano/Mikro-Dispersionen jeweils bei Raumtemperatur effektiv möglich sind.

Die Aufgabe der Erfindung wird außerdem durch ein Verfahren zur Herstellung eines polymeren Komposits gemäß der Merkmale des Anspruchs 15 gelöst.

Erfindungswesentlich ist dabei, dass vor und/oder nach der Aushärtung der polymeren Nanodispersion eine Temperung erfolgt.

Wesentlich ist außerdem, dass die Nanodispersion bzw. die Nano/Mikro-Hybriddispersion und/oder das entsprechende polymere Komposit einer Temperung (z.B. 10 min 110°C) unterzogen werden. Dadurch kommt es zu Nachkondensationsreaktionen zwischen den Oberflächenbereichen der Nanopartikel und der Polysiloxanhülle, in der Polysiloxanhülle selbst sowie zwischen der Polysiloxanhülle und der reaktiven Matrix (nachgewiesen in GC-headspace-Simulationsexperimenten anhand der Bildung von Methanol und Wasser). Damit wird erreicht, dass z.B. oberflächenmechanische Eigenschaften der ausgehärteten Kompositbeschichtung, insbesondere die Abriebfestigkeit, im Vergleich zum ungetemperten Referenzkomposit nochmals um typisch einen Faktor größer 2 verbessert werden.

Bevorzugt ist, dass die Temperung im Bereich von 1 s bei 800°C bis 156 h bei 30°C erfolgt, wobei eine Temperung der Nanodispersion vor der Aushärtung zum Komposit über ca. 10 min bei ca. 110°C besonders bevorzugt ist.

### Pulverpräparationen:

### Beispiel 1:

In einer Apparatur bestehend aus 2l-Dreihalskolben mit KPG-Rührer, Dimroth-Kühler, 200 ml -Tropftrichter, Heizplatte und Siliconölbad werden 1 mol Aluminiumtrilsopropoxid und 700 ml Isopropanol vorgelegt und unter Rühren bis zum Sieden (82 °C) erhitzt. Nach vollständiger Auflösung des Isopropoxides wird innerhalb von 90 min eine Lösung von 0.5 mol Maleinsäure oder Maleinsäureanhydrid in 80 ml Wasser zugetropft.
Dabei fällt sukzessive in quantitativer Ausbeute ein basisches Aluminiummaleat - Bis-Aluminiumdihydroxy-maleat - aus (im weiteren mit Almal bezeichnet).
Nach weiteren 30 min Nachreaktion unter Rückfluss und Abkühlen wird das Lösemittel in einem Rotationsverdampfer unter vermindertem Druck vom erfindungsgemäßen Almal-Nanopulver abdestilliert. Das zurückgewonnene wasserhaltige Isopropanol wird durch Zugabe von technischem Steinsalz (330 g/l) entwässert und in den Prozess zurückgeführt.

### Beispiel 2:

Das ist das Vergleichsprodukt zum erfindungsgemäßen Almal-Nanopulver, hergestellt gemäß P7 (US 6,369,183 A), im Folgenden als Almal-Cook bezeichnet.

Die Präparation des Ausgangsproduktes Nano-Böhmit erfolgte gemäß P7, dortiges Beispiel 1.
Das Vergleichsprodukt (Almal-Cook) wurde nach P7, dortiges Beispiel 2, jedoch unter dem Einsatz einer äquimolaren Menge an Maleinsäure, anstelle von 4-Hydroxybenzoesäure, erhalten.

### Beispiel 3:

Präparation analog Beispiel 1, jedoch tropfenweise Zugabe einer Lösung von 0.5 mol DL-Hydroxybernsteinsäure (Äpfelsäure) in 200 ml Wasser. Es wird nahezu quantitativ Bis-Aluminiumdihydroxy-malat (Almalat) - Nanopulver erhalten.

### Beispiel 4:

Präparation wie Beispiel 1, jedoch tropfenweise Zugabe eines Gemisches von 0.5 mol 5-Hydroxyisophthalsäure, 100 ml Wasser und 200 ml Isopropanol. Es wird nahezu quantitativ Bis-Aluminiumdihydroxy-(5-hydroxy)-isophthalat (Alhip) - Nanopulver erhalten.

### Beispiel 5:

Präparation wie Beispiel 1, jedoch tropfenweise Zugabe eines Gemisches von 0.5 mol 5-Aminoisophthalsäure, 100 ml Wasser und 200 ml Isopropanol. Es wird nahezu quantitativ Bis-Aluminiumdihydroxy-(5-amino)-isophthalat (Alaip) - Nanopulver erhalten.

### Beispiel 6:

In einer Apparatur bestehend aus 21-Dreihalskolben mit KPG-Rührer, Dimroth-Kühler, 200 ml - Tropftrichter, Heizplatte und Siliconölbad werden 0.428 mol Aluminiumchlorid-Hexahydrat, 0.214 mol Maleinsäure oder Maleinsäureanhydrid und 750 ml Wasser vorgelegt und unter Rühren bis zum Sieden erhitzt. Danach wird innerhalb von 90 min eine Lösung von 0.643 mol Natriumcarbonat in 250 ml Wasser zugetropft. Dabei fällt analog zum Beispiel 1 sukzessive in quantitativer Ausbeute Almal-Nanopulver aus. Nach weiteren 30 min Nachreaktion unter Rückfluss und Abkühlen wird das Almal durch Zentrifugation abgetrennt. Die Zentrifugation wird unter Einsatz von jeweils 750 ml destilliertem Wasser solange wiederholt, bis die wässrige Phase chloridfrei ist (Kontrolle mit wässriger Silbernitrat-Lösung). Zuletzt wird das Almal an der Luft getrocknet.

### Beispiel 7:

In einer Apparatur bestehend aus 2l-Dreihalskolben mit KPG-Rührer, Dimroth-Kühler, 200 ml - Tropftrichter, Heizplatte und Siliconölbad werden 1.0 mol Hydroxyaluminiumdiacetat (essigsaure Tonerde) in 750 ml Wasser suspendiert und unter Rühren 2 Stunden unter Rückfluss erhitzt. Danach wird innerhalb von 90 min eine Lösung von 0.5 mol Maleinsäure oder Maleinsäureanydrid in 80 ml Wasser zugetropft. Dabei bildet sich in quantitativer Ausbeute Almal-Nanopulver. Nach weiteren 180 min Nachreaktion unter Rückfluss und Abkühlen wird das Essigsäure-Wasser - Gemisch in einem Rotationsverdampfer unter vermindertem Druck vom Almal abdestilliert und durch Rektifikation aufgearbeitet.

### Präparation der Nanodispersionen:

Beispiele 8-14 sind bezüglich Acrylat-Nanodispersionen

### Beispiel 8:

In einem 250 ml beheizbaren Rührgefäß mit angeschlossenem Labordispermat und Thermostat werden 23.2 g Ebecryl 5129, 46.4 g Sartomer 454, 1.75 g DYNASYLAN VTMO, eine Lösung von 64 mg Maleinsäure in 0.64 ml Wasser, 1 g Disperbyk 108 sowie 0.2 g 4-Hydroxyanisol vorgelegt. Das Gemisch wird 10 min bei 60°C und 1000 U/min Drehzahl gerührt. Danach gibt man unter fortwährendem Rühren 30 g Almal-Nanopulver (aus Beispiel 1) innerhalb von 30 Minuten zu und steigert die Drehzahl der Rührwelle sukzessive auf 4000 U/min. Man rührt noch ca. 3 Stunden bei 60°C und 4000 U/min nach, gibt danach 3.0 g Sartomer 297 zu und beseitigt Partikelagglomerate und Partikelaggregate durch eine dreistündige Vermahlung in einer Hochleistungs-Rührwerkskugelmühle. Wie auch bei den nachfolgenden Beispielen ist diese intensive mechanische Nachbehandlung für die Präparation von optisch transparenten Kompositbeschichtungen notwendig. Man erhält eine milchige und bei Raumtemperatur auf konventionellen Walzenauftragswerken applizierbare Nanodispersion.

### Beispiel 9:

Das ist die Vergleichsdispersion zum Beispiel 8 gemäß P1.

In einem 250 ml beheizbaren Rührgefäß mit angeschlossenem Labordispermat und Thermostat werden 23.2 g Ebecryl 5129, 46.4 g Sartomer 454, 12.5 g DYNASYLAN VTMO, eine Lösung von 460 mg Maleinsäure in 4.6 ml Wasser sowie 0.2 g 4-Hydroxyanisol vorgelegt. Das Gemisch wird 10 min bei 70°C und 1000 U/min Drehzahl gerührt. Danach gibt man unter fortwährendem Rühren 25 g AEROSIL OX50 innerhalb von 45 Minuten zu und steigert die Drehzahl der Rührwelle sukzessive auf 4000 U/min. Man rührt noch 4 Stunden bei 70°C und 4000 U/min nach und beseitigt Partikelagglomerate und Partikelaggregate durch eine dreistündige Vermahlung in einer Hochleistungs-Rührwerkskugelmühle. Man erhält eine leicht trübe und bei 40°C auf konventionellen Walzenauftragswerken applizierbare Nanodispersion.

### Beispiel 10:

Das ist die Vergleichsdispersion zum Beispiel 8 gemäß P7.

Präparation wie Beispiel 8, jedoch unter Einsatz von Almal-Cook aus Beispiel 2.

### Beispiel 11:

Präparation wie Beispiel 8, jedoch Ersatz von Ebecryl 5129 durch Ebecryl 830.

### Beispiel 12:

Das ist die Vergleichsdispersion zum Beispiel 11 gemäß P7.

Präparation wie Beispiel 11, jedoch unter Einsatz von Almal-Cook aus Beispiel 2.

### Beispiel 13:

In einem 250 ml beheizbaren Rührgefäß mit angeschlossenem Labordispermat und Thermostat werden 26.9 g CN 963B80, 50.1 g Sartomer 351, 1.35 g DYNASYLAN VTMO, eine Lösung von 48 mg Maleinsäure in 0.48 ml Wasser, 1 g Disperbyk 108 sowie 0.2 g 4-Hydroxyanisol vorgelegt. Das Gemisch wird 10 min bei 60°C und 1000 U/min Drehzahl gerührt. Danach gibt man unter fortwährendem Rühren 22.5 g Almal-Nanopulver (aus Beispiel 1) innerhalb von 30 Minuten zu und steigert die Drehzahl der Rührwelle sukzessive auf 4000 U/min. Man rührt noch ca. 3 Stunden bei 60°C und 4000 U/min nach, gibt danach 3.0 g Sartomer 297 zu und beseitigt Partikelagglomerate und Partikelaggregate durch eine dreistündige Vermahlung in einer Hochleistungs-Rührwerkskugelmühle.

### Beispiel 14:

In einem 250 ml beheizbaren Rührgefäß mit angeschlossenem Labordispermat und Thermostat werden 27.8 g Ebecryl 5129, 41.7 g Sartomer 238, 1.75 g DYNASYLAN VTMO, eine Lösung von 64 mg Maleinsäure in 0.64 ml Wasser, 1 g Disperbyk 108 sowie 0.2 g 4-Hydroxyanisol vorgelegt. Das Gemisch wird 10 min bei 60°C und 1000 U/min Drehzahl gerührt. Danach gibt man unter fortwährendem Rühren 30 g Almal-Nanopulver (aus Beispiel 1) innerhalb von 30 Minuten zu und steigert die Drehzahl der Rührwelle sukzessive auf 2500 U/min. Man rührt noch 3 Stunden bei 60°C und 2500 U/min nach, gibt danach 3.0 g Sartomer 297 zu und beseitigt Partikelagglomerate und Partikelaggregate durch eine dreistündige Vermahlung in einer Hochleistungs-Rührwerkskugelmühle. Man erhält eine milchige und bei Raumtemperatur spritzbare Nanodispersion.

### Beispiel 15:

Präparation wie Beispiel 14, jedoch Ersatz von Ebecryl 5129 durch Ebecryl 830. Man erhält eine milchige und bei Raumtemperatur spritzbare Nanodispersion.

### Beispiel 16:

Dies ist eine Nanodispersion in einem Epoxid/Polyol-Gemisch.

In einem 250 ml beheizbaren Rührgefäß mit angeschlossenem Labordispermat und Thermostat werden 70 g Uvacure 1530 und 1.0 g Disperbyk 108 und auf 50°C bei 1000 U/min Drehzahl erwärmt. Danach gibt man unter fortwährendem Rühren 30 g Almal-Nanopulver (aus Beispiel 1) innerhalb von 30 Minuten zu und steigert die Drehzahl der Rührwelle sukzessive auf 4000 U/min. Man rührt noch ca. 3 Stunden bei 50°C und 4000 U/min nach und beseitigt Partikelagglomerate und Partikelaggregate durch eine dreistündige Vermahlung in einer Hochleistungs-Rührwerkskugelmühle.

### Beispiel 17:

Das ist die Vergleichsdispersion zum Beispiel 16, hergestellt gemäß P7.

Präparation wie Beispiel 16, jedoch unter Einsatz von Almal-Cook aus Beispiel 2.

### Beispiel 18:

Dies ist eine Nanodispersion in einem Isocyanat.

In einem 250 ml beheizbaren Rührgefäß mit angeschlossenem Labordispermat und Thermostat werden 70 g Desmodur E 23 und 1.0 g Disperbyk 108 und auf 40°C bei 1000 U/min Drehzahl erwärmt. Danach gibt man unter fortwährendem Rühren 30 g Almalat-Nanopulver (aus Beispiel 3) innerhalb von 30 Minuten zu und steigert die Drehzahl der Rührwelle sukzessive auf 4000 U/min. Man rührt noch ca. 3 Stunden bei 40°C und 4000 U/min nach und beseitigt Partikelagglomerate und Partikelaggregate durch eine dreistündige Vermahlung in einer Hochleistungs-Rührwerkskugelmühle.

### Beispiel 19:

Dies ist eine Nanodispersion in einem Isocyanat/Polyol-Gemisch.

In einem 250 ml Dreihalskolben mit Rührer, Rückflusskühler und Heizbad werden 70 g Nano 110/12464 und 1.08 g Disperbyk 108 vorgelegt und auf 40°C bei 1000 U/min Drehzahl erwärmt. Danach gibt man unter fortwährendem Rühren 37.7 g Almalat-Nanopulver (aus Beispiel 3) innerhalb von 30 Minuten zu. Man rührt ca. 3 Stunden bei 60°C und 1000 U/min nach, dosiert noch 6.5 g n-Butylacetat und beseitigt Partikelagglomerate und Partikelaggregate durch eine dreistündige Vermahlung in einer Hochleistungs-Rührwerkskugelmühle.
Zur Fertigung der 2K-Nanodispersion werden 10 g Nanodispersion mit 1.25 g Nano 65/103 verrührt und unmittelbar darauf ausgehärtet.

Untersuchungsergebnisse der erfindungsgemäßen Lösung im Vergleich zum Stand der Technik, anhand von Figuren näher erläutert.
Es zeigen :
- Fig.1: Ramanspektren der metallorganischen Nanopartikel gemäß Beispiel 1 und 2
- Fig.2: Rheologieprofile von Nanodispersionen auf Acrylatbasis
- Fig.3: Abbildungen von lichtmikroskopisch aufgenommenen Tests zur Diamant-Ritzhärte (Nanokomposite auf Acrylatbasis ohne Temperung)
- Fig.4: Mikroindenter-Messungen (Nanokomposite auf Acrylatbasis ohne Temperung)
- Fig.5: DMTA-Messungen (Nanokomposite auf Acrylatbasis ohne Temperung)
- Fig.6: Taber-Abraser-Tests zur Bestimmung der Abriebfestigkeit von Nanokompositen (Nanokomposite auf Acrylatbasis ohne Temperung)
- Fig.7: Taber-Abraser-Tests zur Bestimmung der Abriebfestigkeit (Nano/Mikro-Hybridkomposite auf Acrylatbasis ohne Temperung
- Fig.8: Mikroindenter-Messungen (Nanokomposite auf Acrylatbasis ohne/mit Temperung)
- Fig.9: DMTA-Messungen (Nanokomposite auf Acrylatbasis ohne/mit Temperung)
- Fig.10: Taber-Abraser-Tests zur Bestimmung der Abriebfestigkeit von Nanokompositen (Nanokomposite auf Acrylatbasis ohne/mit Temperung)
- Fig.11: Taber-Abraser-Tests zur Bestimmung der Abriebfestigkeit (Nano/Mikro-Hybridkomposite auf Acrylatbasis ohne/mit Temperung)
- Fig.12: Mikroindenter-Messungen (Nanokomposite auf Epoxid/Polyol-Basis)
- Fig. 13: DMTA-Messungen (Nanokomposite auf Epoxid/Polyol-Basis)
- Fig.14: Taber-Abraser-Tests zur Bestimmung der Abriebfestigkeit von Nanokompositen (Nanokomposite auf Epoxid/Polyol-Basis).
- Fig.15: Mikroindenter-Messungen (Nanokomposit auf Isocyanat/Polyol-Basis)

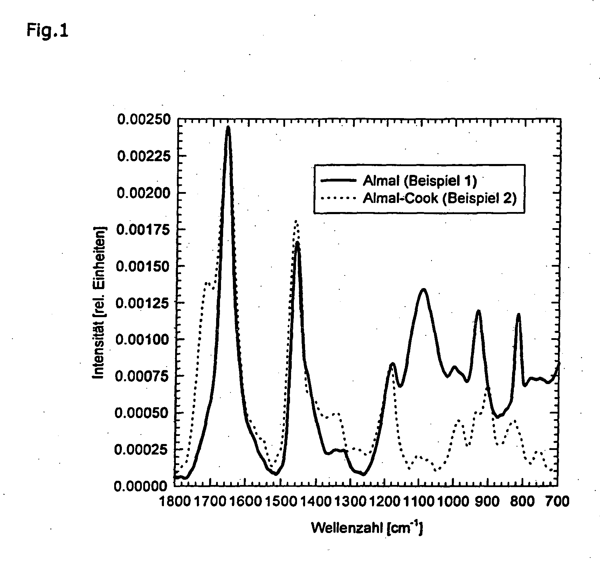

Die Koordinierung der Al-Zentren im Beispiel 1 und 2 ist deutlich verschieden, wie es insbesondere die beiden Ramanspektren, in fig. 1 dargestellt, aufzeigen.

Beispielsweise sind die Almal-Cook Raman-Banden in Fig. 1 bei 1720 und 1340 cm⁻¹ der C=O-Valenzschwingung freier (nicht koordinierender) Carboxylat-Gruppen in den Maleat-Liganden zuzuordnen, diese treten bei Almal (Beispiel 1) nicht auf. Zusätzlich ist der sogenannte "Fingerprint"-Bereich bis zu einer Wellenzahl von ca. 1200 cm⁻¹ verschieden, dies ist für generell unterschiedliche Koordinationstypen charakteristisch. Insbesondere tritt die breite und intensive Bande des Beispiels 1 bei 1090 cm⁻¹ im Almal-Cook (P7) nicht auf.

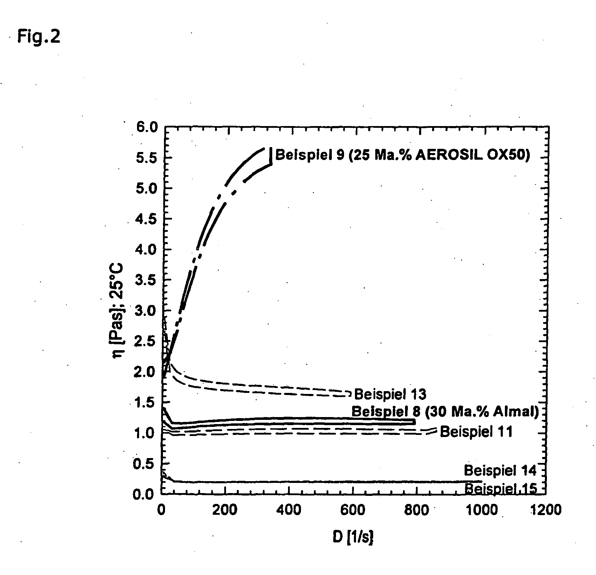

In Figur 2 sind die Rheologieprofile der erfindungsgemäßen Nanodispersionen im Vergleich zu den Ergebnissen gemäß P1-P6 aufgetragen.

Damit lässt sich die Almal-Dispersion gemäß Beispiel 8 mit der gemäß P1 entwickelten "Vergleichsdispersion" - analoge Bindemittel (Acrylat)-ZUsammensetzung, gemäß Beispiel 9 vergleichen.
Die bei Raumtemperatur aufgenommenen scherungsabhängigen Rheologieprofile zeigen signifikante Unterschiede, die den mit dem Almal-Füllstoff erreichten Fortschritt eindrucksvoll dokumentieren. Nahezu alle Almal-Lacke weisen eine für das Auftragsverhalten günstige Newton'sche Rheologie auf (nur Beispiel 13 zeigt mäßig ausgeprägte Thixotropie), wobei die Viskositäten den praktischen Erfordernissen des untemperierten Walzenauftrags (Beispiele 8, 11,13) und der Spritzbarkeit (Beispiele 14,15) entsprechen.
Die mögliche Rheologieoptimierung durch bloße Auswahl der Acrylatkomponenten stellt ein herausragendes Ergebnis sowie eine grundlegende Neuheit dar und wird durch das dilatante Verhalten des Vergleichssystems Beispiel 9 besonders veranschaulicht: Das Viskositätsniveau des Vergleichs-Beschichtungslackes gemäß Beispiel 9 lässt nur einen temperierten Walzenauftrag bei typisch 40°C zu.

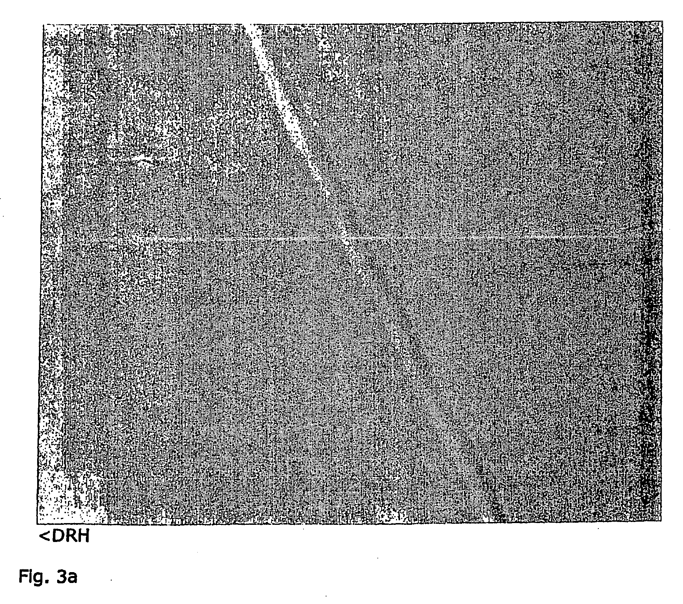

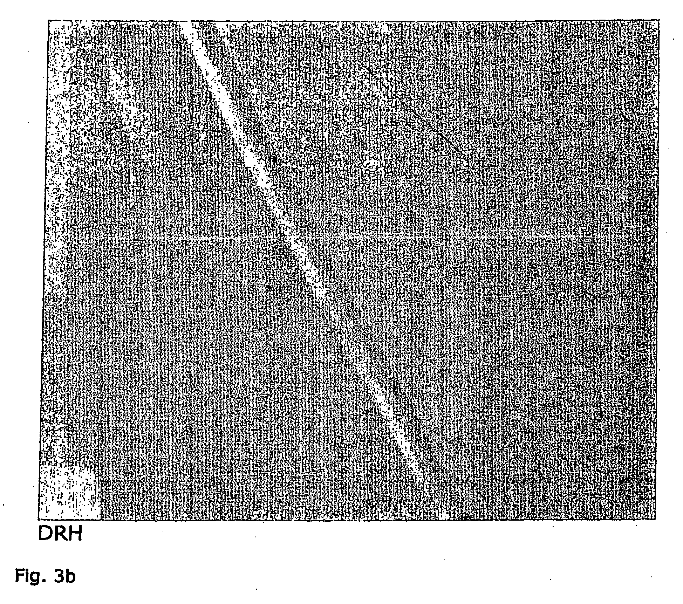

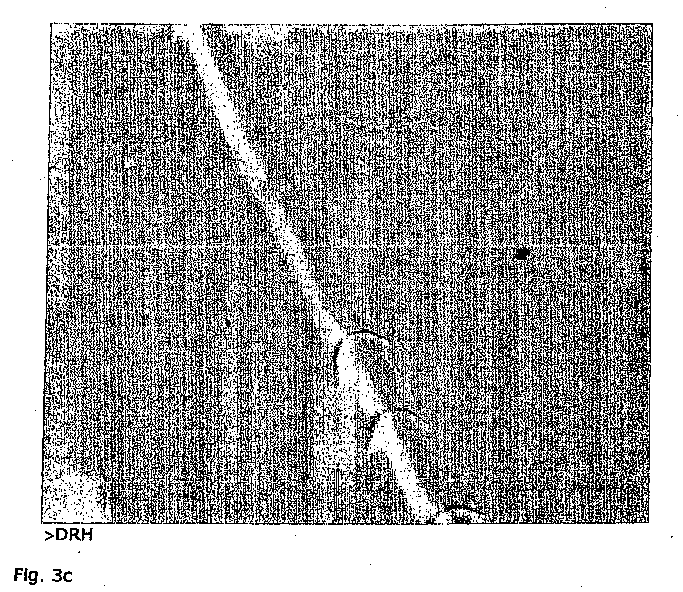

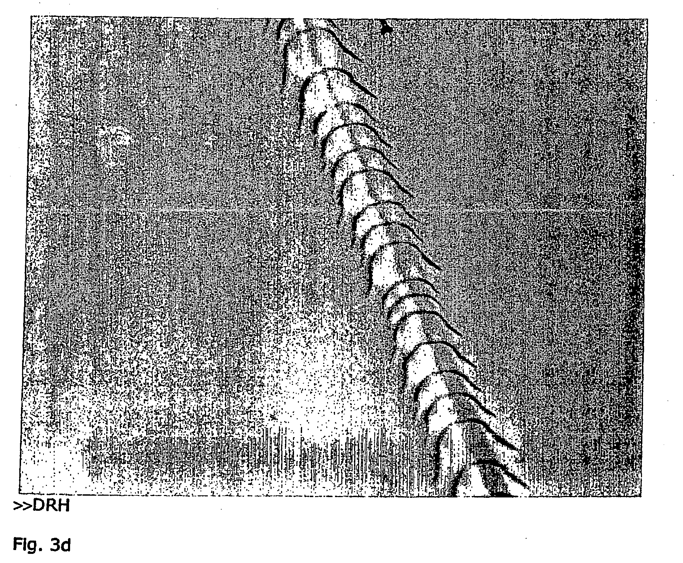

Die Vorteile der erfindungsgemäßen gehärteten Nanokomposite im Vergleich zu den in den P1-P2 und P5-P7 beschriebenen Systemen zeigen sich beispielsweise anhand der Diamant-Ritzhärte, dargestellt in Fig. 3.

Die nach dem Ritzen lichtmikroskopisch aufgenommenen Schadspuren sind für niedrige Kräfte geradlinig glatt und kaum wahrnehmbar (Fig. 3a).
Die letzte Kratzspur ohne "fischgrätenartige" irreversible Schädigungsmuster ist der Diamantritzhärte DRH zuzuordnen (Fig. 3b).
Für höhere Druckkräfte steigt dann nur noch die Fischgrätendichte(Fig. 3c und d), wobei die Druckkräfte gemäß Fig. 3c < 3d sind.

Veranschaulichung der Diamantritzhärte (DRH) für Nanokomposit-Beschichtungen.

DRH: (es wurde die UV-Härtung angewendet)

| | |
|---|---|
| unmodifizierte Matrix von Beispiel 8, 9 und 10: | 2.5 N |
| Beispiel 8 (MOP): | 4.0 N |
| Beispiel 9 (P1): | 3.0 N |
| Beispiel 10 (P7): | 2.0 N |

Interessanterweise vermindert das Almal-Cook-Nanopulver die Ritzhärte des Nanokomposites im Vergleich zur unmodifizierten Matrix.
Wahrscheinlicher Grund: Das ausschließliche Vorhandensein der organischen Maleat-Liganden an den Partikeloberflächen und die daraus resultierende hohe Liganden-Konzentration wirkt erweichend. Beim Almal (MOP, eigene Erfindung) sind dagegen die Liganden gleichmäßig an der Oberfläche und im Partikelinneren verteilt und somit ist der Oberflächenanteil im Vergleich zum Beispiel 10 wesentlich geringer.

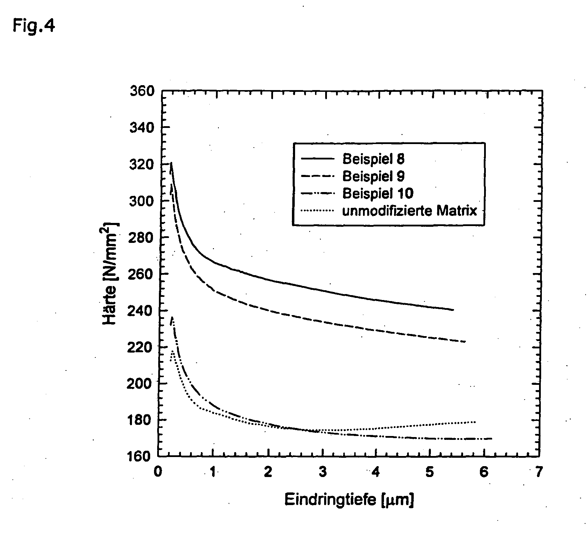

Die Vorteile der erfindungsgemäß gehärteten Nanokomposite im Vergleich zu den in den P1-P2 und P5-P7 beschriebenen Systemen zeigen sich beispielsweise anhand von Mikroindenter-Messungen, dargestellt in Fig. 4.
Diese Untersuchungen erlauben insbesondere die Bestimmung der Kenngrößen Martenshärte MH (Härte bei maximaler Eindringtiefe dₘₐₓ der Diamant-Spitze), Speichermodul E' und maximaler Eindringtiefe aus den Primärdaten. In Vergleich zur Diamant-Ritzhärte zeigt sich ein analoger Gang. Im Vergleich zur unmodifizierten Beschichtung wird das gesamte Härteprofil um ca. 80 N/mm² (MOP) bzw. ca. 60 N/mm² (P1) angehoben. Im Beispiel 10 (P7) vermindert sich sogar die Martenshärte-Härte und die Diamant-Spitze dringt tiefer in das Nanokomposit ein.

Auch die aus den Messungen erhaltenen Speichermoduli E' (in GPa) bestätigen die bisherigen Befunde:

| | |
|---|---|
| ungefüllte Matrix: | 3.3 |
| Beispiel 8 (MOP): | 4.0 |
| Beispiel 9 (P1): | 3.8 |
| Beispiel 10 (P7): | 3.0 |

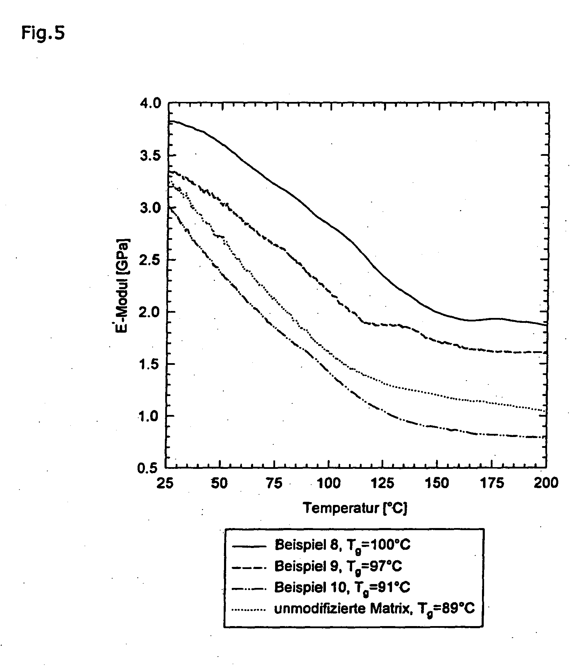

Die Vorteile der erfindungsgemäß gehärteten Nanokomposite im Vergleich zu den in den P1-P2 und P5-P7 beschriebenen Systemen zeigen sich beispielsweise anhand von DMTA-Messungen, dargestellt in Fig. 5.

Da es sich um eine von vornherein hochvernetzende Matrix handelt, ist die Erhöhung der Glasübergangstemperatur T_{g} im Beispiel 8 (MOP) und Beispiel 9 (P1) nicht sehr ausgeprägt.

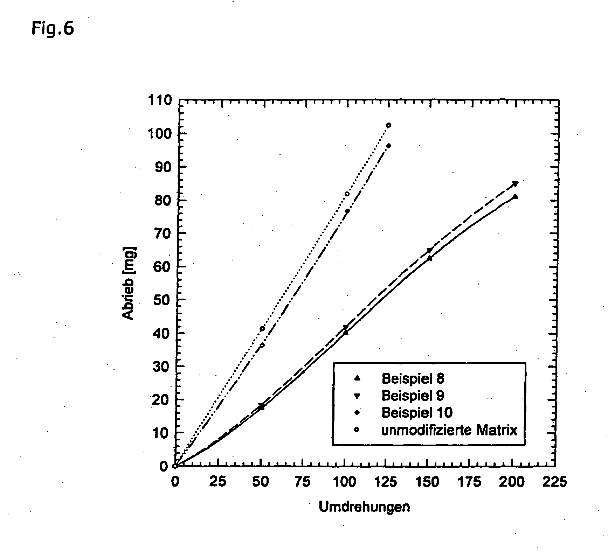

Die Vorteile der erfindungsgemäßen gehärteten Nanokomposite im Vergleich zu den in den P1-P2 und P5-P7 beschriebenen Systemen zeigen sich beispielsweise anhand der Abriebfestigkeit, dargestellt in Fig. 6.

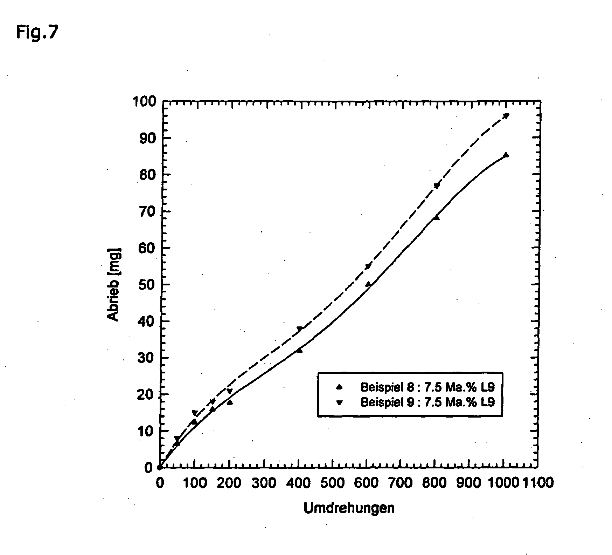

Eine zusätzliche Füllung von Beispiel 8 (MOP) und 9 (P1) mit je 7.5 Ma.% Mikro-Korund Laminal 9 (L9) gemäß P4 führt zu einer noch gravierenderen Verbesserung der Abriebfestigkeit um jeweils etwa einen Faktor 5, aus Fig. 7 ersichtlich.

Zusätzlich wird der Vorteil der Kombination MOP/P4 gegenüber P1/P4 verdeutlicht; der Endabrieb ist um ca. 10% geringer.

Ersetzt man das "round milled alumina" Laminal L9 durch den scharfkantigen Mikrokorund ZWSK F 600, so vermindert sich der Abrieb nochmalig um jeweils ca. 20%. Allerdings wirkt diese Nano/Mikro-Hybriddispersion stark abrasiv.

Eine der Härtung vor- und/oder nachgeschaltete thermisch induzierte Nachkondensation zwischen den Oberflächenbereichen der metallorganischen Nanopartikel (Alanol-Gruppen) und der Silanhülle (Silanol-Gruppen), innerhalb der Silanhülle sowie zwischen Silanhülle und der organischen Matrix führt zu einer drastischen Verbesserung viskoelastischer und oberflächenmechanischer Kenngrößen wie z.B. Erhöhung der Mikrohärte, des Speichermodul E', der Glasübergangstemperatur T_{g} und insbesondere zur Verbesserung der Abriebfestigkeit von Nano- und Nano/Mikro-Hybridkompositen.

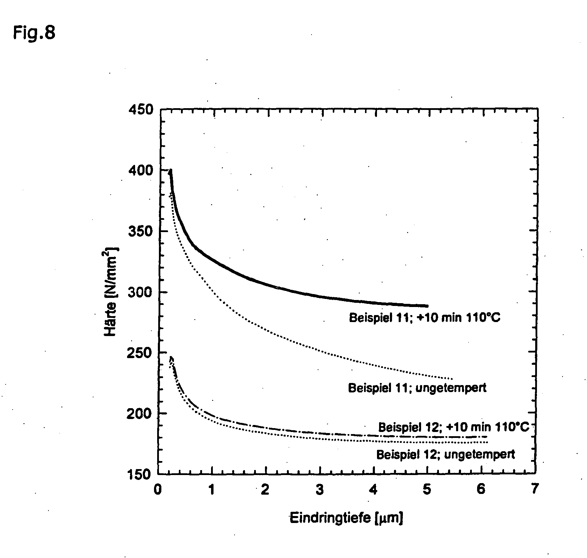

In Fig. 8 ist die Mikrohärte von Almal/Acrylat- und Almal-Cook/Acrylat-Nanokompositen dargestellt. Im Vergleich zur ungetemperten Almal-Kompositbeschichtung Beispiel 11 wird im Falle des vor der Polymerisation getemperten Komposites das gesamte Härteprofil bis zu über 60 N/mm² angehoben. Dagegen kann eine entsprechende Temperung im Falle der Almal-Cook-Beschichtung Beispiel 12 die vornherein wesentlich geringere Mikrohärte nicht signifikant beeinflussen. Wahrscheinlicher Grund: Das ausschließliche Vorhandensein der organischen Maleat-Liganden an den Partikeloberflächen und die daraus resultierende hohe Liganden-Konzentration blockiert sterisch die Alanol(Al-OH)-Gruppen. Die thermisch induzierten Nachkondensations-Reaktionen mit der Polysiloxanhülle laufen mit nur geringer Wahrscheinlichkeit ab.

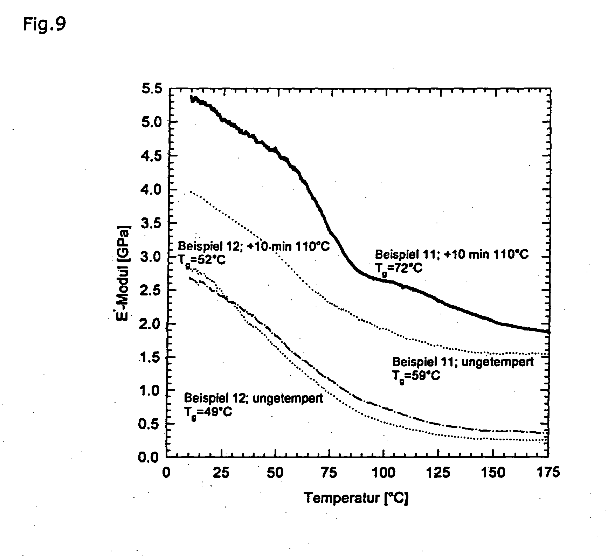

In den DMTA-Untersuchungen (Fig.9) zeigt sich ein analoger Gang: Im Vergleich zur ungetemperten Almal-Kompositbeschichtung Beispiel 11 wird im getemperten Beispiel 11 das gesamte mechanische Dispersionsgebiet (und somit die Glasübergangstemperatur T_{g}) zu höherem Wert verschoben. Damit ist eine stark ausgeprägte Erhöhung des Speichermodul E' über den gesamten vermessenen Temperaturbereich verbunden. Dagegen kann eine Temperung der Almal-Cook-Beschichtung Beispiel 12 die vornherein wesentlich niedrigere Glasübergangstemperatur und den geringeren Speichermodul nicht signifikant beeinflussen. Gründe hierfür wurden bereits in der Diskussion zu Fig.8 diskutiert.

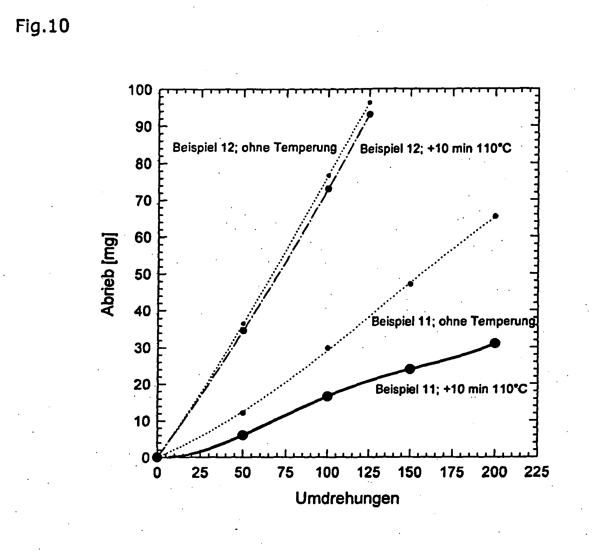

Auch die Abriebuntersuchungen in Fig. 10 sind wiederum konform: Im Vergleich zur ungetemperten Almal-Kompositbeschichtung Beispiel 11 wird im getemperten Beispiel 11 die Abriebfestigkeit um mindestens einen Faktor 2 verbessert. Dagegen wird durch eine Temperung der Almal-Cook-Beschichtung Beispiel 12 die von vornherein wesentlich geringere Abriebfestigkeit nicht signifikant beeinflusst.

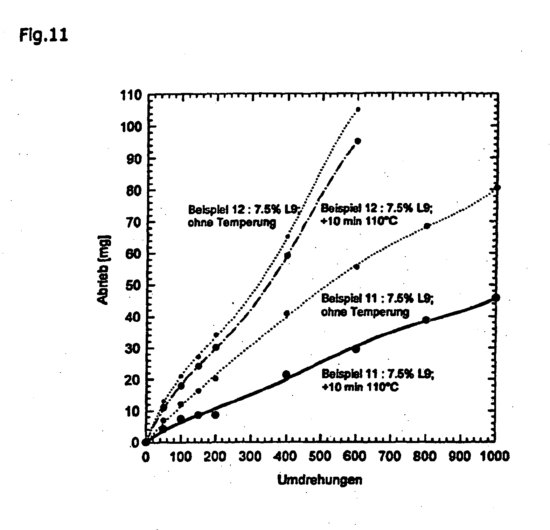

Und schließlich überträgt sich dieser Befund auf die entsprechenden Nano/Mikro-Hybridkomposite (jeweils zusätzlich 7.5 Ma.% Mikrokorund L9 enthaltend; Fig.11): Bereits die ungetemperte Almal/L9-Kompositbeschichtung Beispiel 11 zeigt gegenüber dem entsprechenden reinen Nanokomposit Beispiel 11 in Fig. 10 eine Erhöhung der Abriebfestigkeit um über einen Faktor 3 nach 200 Umdrehungen der Prüfscheibe. Dies ist der synergetischen Wirkung des Mikrokorundes L9 zuzuschreiben und setzt sich bei dem getemperten Beispiel 11 in Fig. 11 in einer weiteren Verbesserung der Abriebfestigkeit um ca. einen zusätzlichen Faktor 3 nach 200 Umdrehungen der Prüfscheibe fort. Letztendlich hat sich die Schichtdicke der getemperten Almal/L9-Kompositbeschichtung Beispiel 11 in Fig.11 selbst nach 1000 Umdrehungen der Prüfscheibe noch nicht einmal um 50% vermindert.
Auch eine Erhöhung der Abriebfestigkeit der ungetemperten Almal-Cook/L9-Kompositbeschichtung Beispiel 12 (Fig.11) im Vergleich zum entsprechenden reinen Nanokomposit Beispiel 12 in Fig.10 ist aufgrund der synergetischen Wirkung des Mikrokorundes L9 unverkennbar, wenn auch im Vergleich zu den entsprechenden Almal-Beispielen 11 in Fig.10 und 11 weit weniger ausgeprägt. Und wiederum tritt durch eine Temperung keine signifikante Abriebverminderung ein.

In Nanokompositen auf Epoxid/Polyol-Basis zeigt sich im Falle der Diamant-Ritzhärte der erwartete Gang beim Almal-Nanokomposit (Beispiel 16 gemäß MOP) noch verstärkt. Es ist festzustellen, dass das Epoxid/Polyol-System mit Almal-Cook (Beispiel 17 gemäß P7) im Gegensatz zum entsprechenden Acrylat-Komposit (Beispiel 10 gemäß P7) ebenfalls einen sehr deutlichen Härtezuwachs bringt.

| | |
|---|---|
| ungefüllte Matrix gemäß der Beispiele 16 und 17 | 1.5 N |
| Beispiel 16 (MOP) | > 6.0 N |
| Beispiel 17 (P7) | 5.0 N |

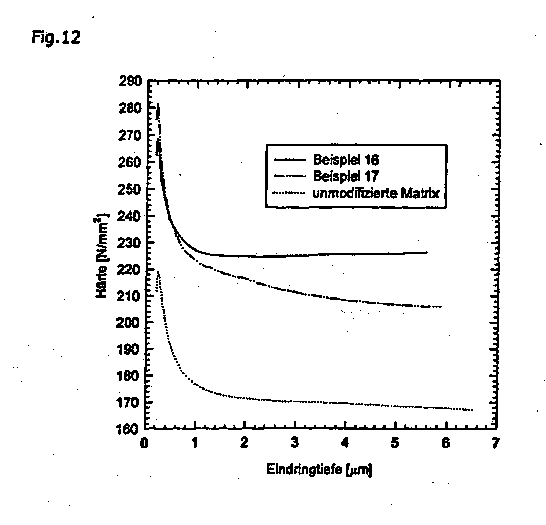

In Mikroindenter-Messungen, dargestellt in Fig. 12, zeigt sich im Vergleich zur Diamant-Ritzhärte auch hier ein analoger Gang.

Auch die aus den Messungen erhaltenen Speichermoduli E' (in GPa) bestätigen die bisherigen Befunde:

| | |
|---|---|
| ungefüllte Matrix: | 3.8 |
| Beispiel 16 (MOP): | 6.2 |
| Beispiel 17 (P7): | 5.0 |

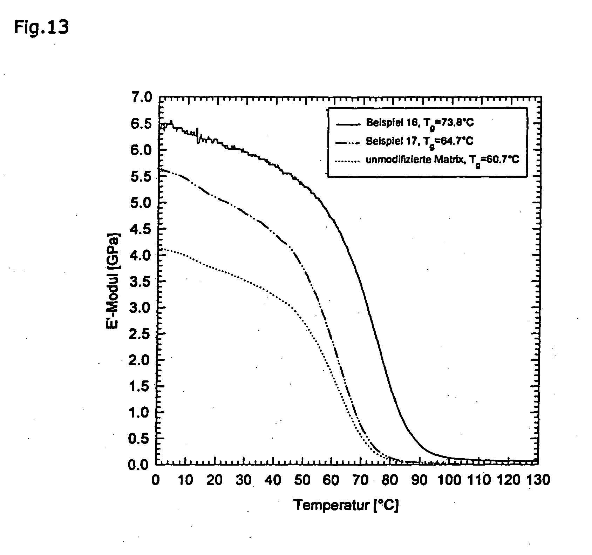

Auch die DMTA-Messungen (Fig.13) ordnen sich in die festgestellte Systematik ein.

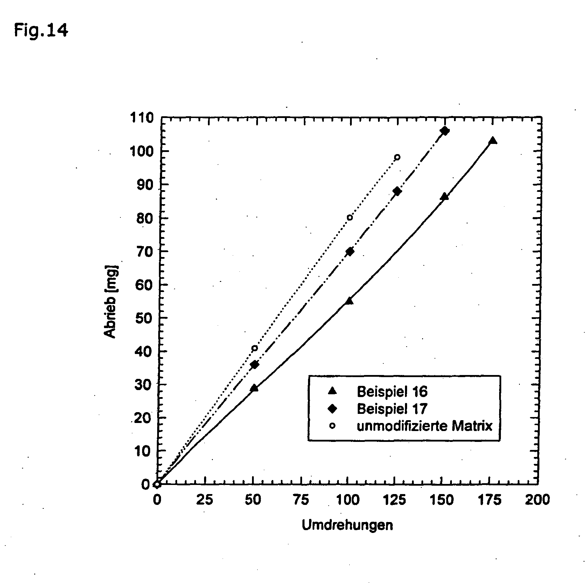

Auch bei der Abriebfestigkeit zeigt sich wieder der erwartete Gang, auch wenn die Abriebfestigkeit im Vergleich zu den Acrylat-Nanokompositen im MOP deutlich geringer ist, wie aus Fig.14 ersichtlich.

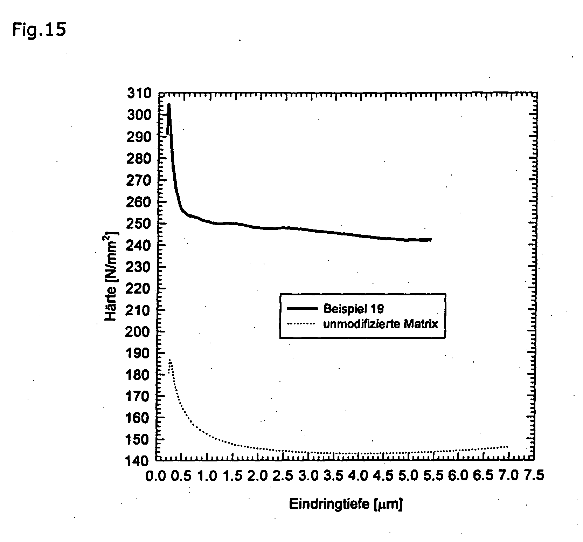

In Nanokompositen auf Isocyanat/Polyol-Basis wird das gesamte Mikroindenter-Härteprofil im Vergleich zur ungefüllten organischen Matrix besonders stark angehoben (Fig.15). Dadurch ergibt sich im Vergleich zu den bisher beschriebenen Systemen ein in dieser Ausprägung noch nicht beobachteter Anstieg des Speichermodul E' (in GPa):

| | |
|---|---|
| ungefüllte Matrix: | 4.5 |
| Beispiel 19 (MOP): | 7.3 |

### Verwendete Testmethoden (Beispiele 1 bis 19):

- Scherungsabhängige Rheologie bei Raumtemperatur mit Rheometer RC20 (Rheotec GmbH)
   Schritt 1: in 120 s von D = 5 s⁻¹ bis maximal mögliche Scherung
   Schritt 2: 120 s bei maximal möglicher Scherung
   Schritt 3: in 120 s von maximal möglicher Scherung bis D = 5 s⁻¹
- Abriebprüfung mit Taber-Abraser
   (Taber Industries); 2 Reibrollen CS 0 mit Korund-Schmirgelpapier S 42 + 2 * 500 g Zusatzgewicht
   gravimetrische Bestimmung des Abriebes von 0 bis 200 Umdrehungen aller 50 U, danach optional aller 50 oder 200 U bis maximal 1000 U; nach jeweils 200 U neues Schmirgelpapier S 42
- Diamantritzhärte mit Erichsen-Testgerät Typ 413
   (Erichsen GmbH)
   Messungen im Kraftbereich F 0.5 - 6.0 N; Schrittweite ΔF 0.5 N
- Mikroindenter-Messungen mit Fischerscope H100C (Fischer)
   insbesondere Bestimmmung von Martens-Härte, Speichermodul und maximaler Eindringtiefe der Diamantspitze unter der Kraft F = 200 mN über 20 s
- FTIR-ATR mit Spektrometer Vector 22 (Bruker)
   Charakterisierung der Koordinationstypen in den Metallcarboxylat-Nanopulvern
- FT-Raman mit Spektrometer RFS 100 (Bruker)
   Charakterisierung der Koordinationstypen in den Metallcarboxylat-Nanopulvern und Bestimmung des Einvernetzungsgrades in organische Matrices
- DMTA mit DMA7e (Perkin Elmer)
   mit angelegten statischen und dynamischen Erregerkräften von 200 mN bei einer Frequenz von 1 Hz im Temperaturbereich von 25 bis 250°C. Insbesondere Bestimmung des Speichermodul E' und der Glasübergangstemperatur T_{g}.

### Verwendete Substrate (Beispiele 8 bis 19):

- Papiervorimprägnat (Masa)
   Abriebprüfung CS 0 / S 42
- Glasplatten 100_{*}100_{*}3 mm³ Mikroindentermessungen, DMTA
- Polycarbonat-Platten 100_{*}100_{*}3 mm³
   Mikroindentermessungen, Diamant-Ritzhärte

### Verwendete Beschichtungs- und Härtungstechnik (Beispiele 8 bis 19):

Beschichtungen der Substrate mit Lackhanteln - Spaltbreite 50 µm (Dekorpapier) bzw. 200 µm (Glas- und PC-Platten) - unter Verwendung des Filmziehgerätes Simex AF-3

Bei Acrylat-Nanodispersionen:
zugesetzte Photoinitiator-Kombination: jeweils +2/1/1 Ma.% LucirinTPO-L/Darocur 1173/Irgacure 500.

Im Falle von Beispiel 13 und 14 (außenbewitterungsstabile Systeme): Zusätzlich jeweils +1/1 Ma.% Tinuvin 123/Tinuvin 400
optional Nachkondensation durch 10-minütiges Tempern bei 110°C im Trockenschrank; UV-Härtung mit Mitteldruck-Hg-Lampe (IST-Nürtingen), Bandgeschwindigkeit 6 m/min, O₂-Restgehalt < 200 ppm, Leistungsdichte 1_{*}60 W/cm + 1_{*}120 W/cm

Bei Epoxid/(Polyol)-Nanodispersionen:
jeweils Zusatz von 5 Ma.% Cyracure UVI 6974 als Photoinitiator, UV-Härtung mit Mitteldruck-Hg-Lampe (IST-Nürtingen), Bandgeschwindigkeit 6 m/min, O₂-Restgehalt < 200 ppm, Leistungsdichte 5_{*}120 W/cm

Bei Isocyanat/(Polyol)-Nanodispersionen:
Thermische Aushärtung im Trockenschrank 30 min 130°C

### Liste der verwendeten Chemikalien:

- EB 5129:: Gemisch aus hexafunktionellem aliphatischen Urethanacrylat und Pentaerithrytoltri/tetraacrylat, Cytec
- EB 830:: hexafunktionelles Polyesteracrylat, Cytec
- CN963B80:: Gemisch aus bifunktionellem aliphatischen Urethanacrylat und 1.6-Hexandioldiacrylat, Cray Valley
- SR297:: 1.3-Butandioldimethacrylat, Cray Valley
- SR4S4:: ethoxyliertes Trimethylolpropantriacrylat, Cray Valley
- SR238:: 1.6-Hexandioldiacrylat; Cray Valley
- SR351:: Trimethylolpropantriacrylat; Cray Valley
- DYNASYLAN VTMO:: Vinyltrimethoxysilan; Degussa
- Uvacure 1530:: Gemisch aus cycloaliphatischem Epoxid und Polyol; Cytec
- Desmodur E 23:: Isocyanat-Prepolymer, Bayer
- Nano 65/103:: Lösung eines Isocyanat-Prepolymers in n-Butylacetat, Cetelon GmbH & Co. KG
- Nano 110/12464:: Lösung eines Polyols in n-Butylacetat, Cetelon GmbH & Co. KG
- Disperbyk 108:: Netz- und Dispergieradditiv, Byk Chemie
- Lucirin TPO-L:: Photoinitiator (Mono-acylphosphinoxid), BASF
- Darocur 1173:: Photoinitiator (α-Hydroxyketon), Ciba
- Irgacure 500:: Photoinitiator (Gemisch aus α-Hydroxyketon und Benzophenon, Ciba)
- Tinuvin 123:: Radikalfänger (HALS-Verbindung), Ciba
- Tinuvin 400:: UV-Absorber (Triazinderivat), Ciba
- Cyracure UVI 6974:: kationischer Photoinitiator für Epoxide, Union Ca rbide
- AEROSIL OX50:: pyrogenes SiO₂-Nanopulver, 40 nm; Degussa
- Laminal 9 (L9):: Mikrokorundpulver "round milled alumina", 9 µm, Alcan Chemicals
- ZWSK F600:: Mikrokorundpulver, 10 µm, Treibacher Schleifmittel AG

## Patentansprüche

1. Metallorganische Nanopulver mit der Zusammensetzung
**MeᵢOⱼ(OH)ₖ[(OOC)ₗ-Rₘ]ₙ**
mit i=1-20, j=0-40, k=0-80, l=1-80, m=1-80, n=1-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind,
**dadurch gekennzeichnet,**
**dass** im Partikelkern und an der Partikeloberfläche des Nanopulvers Liganden (OOC)ₗ-Rₘ vorhanden sind und
im Partikelkern und an der Partikeloberfläche das Molverhältnis Me : (OOC)ₗ-Rₘ) im Bereich von 20 : 1 bis 1 : 4 liegt.

2. Nanopulver gemäß Anspruch 1, **dadurch gekennzeichnet, dass** die mittlere Primärteilchengröße der Partikel im Bereich von ca. 1 bis 300 nm liegt.

3. Nanopulver gemäß Anspruch 1, **dadurch gekennzeichnet, dass** der Aufbau bezüglich Partikelkern und Partikeloberfläche intrinsisch ist.

4. Nanopulver gemäß Anspruch 1, **dadurch gekennzeichnet, dass** das Nanopulver die Struktur Me₂(OH)₄[OOC-R-COO] mit Me = Al und R = CH=CH bei gegebener Z-Konfiguration der Carboxylat-Gruppen besitzt.

5. Nanodispersion, zumindest enthaltend ein Nanopulver gemäß der Ansprüche 1 bis 4 und reaktive organische Matrices.

6. Polymeres Komposit, zumindest umfassend Nanopulver mit der Zusammensetzung gemäß der Ansprüche 1 bis 4 und reaktive Matrices, wobei die Partikel des Nanopulvers chemisch reaktive Gruppen enthalten, die mit den reaktiven Matrices unter Ausbildung von chemischen Bindungen reagieren, oder aber chemisch nicht reaktive Gruppen enthalten, die mit den reaktiven Matrices nicht unter Ausbildung von Bindungen reagieren.

7. Polymeres Komposit gemäß Anspruch 6, **dadurch gekennzeichnet, dass** das Komposit zusätzlich 1 bis 80 Ma.% an anorganischen Mikropartikeln mit einer mittleren Teilchengröße der Partikel von 1-2000 µm enthält.

8. Polymeres Komposit gemäß Anspruch 6, **dadurch gekennzeichnet, dass** das Komposit durch Einwirkung von Elektronen, durch UV-Strahlung oder sichtbarem Licht, von γ-oder Röntgenstrahlung, durch Deposition mechanischer Energie, unter zusätzlichen Einsatz von radikalischen und/oder ionischen Photoinitiatoren, oder von thermischer Energie, besonders bevorzugt unter zusätzlichem Einsatz von radikalischen Thermoinitiatoren und/oder Katalysatoren
erhalten wird.

9. Polymeres Komposit gemäß Anspruch 6, **dadurch gekennzeichnet, dass** das Komposit durch Bulk-Polymerisation, und/oder -Polyaddition und/oder- Polykondensation, Suspensions-Polymerisation und/oder -Polyaddition und/ oder-Polykondensation, Emulsions-Polymerisation und/oder - Polyaddition und/ oder- Polykondensation oder durch eine Polymerisation und/oder Polyaddition und/ oder Polykondensation in Lösung erhalten wird.

10. Verfahren zur Herstellung eines Nanopulvers mit einer Zusammensetzung gemäß den Ansprüchen 1 bis 4, wobei die Partikel durch
(i) in Fällungsreaktionen aus Metallalkoholat-Lösungen mit Carbonsäuren,
(ii) durch doppelte Umsetzung zwischen Metallsalzen und Carbonsäuresalzen oder
(iii) aus einer Verdrängungsreaktion zwischen Metallsalzen schwächerer und/oder leichter flüchtigen Carbonsäuren (z.B. Metallacetate) einerseits und stärkeren und/oder weniger flüchtigen Carbonsäuren gewonnen werden.

11. Verfahren gemäß Anspruch 10, **dadurch gekennzeichnet, dass** die Herstellung eines Nanopulvers durch Fällungsreaktionen aus Metallalkoholat-Lösungen mit Carbonsäuren erfolgt.

12. Verfahren gemäß Anspruch 10, **dadurch gekennzeichnet, dass** die Herstellung eines Nanopulvers in einem einstufigen Verfahren bzw. mit nur einer Synthesestufe erfolgt.

13. Verfahren zur Herstellung einer polymeren Nanodispersion gemäß dem Anspruch 5, wobei zumindest Nanopulver dispergiert wird.

14. Verfahren zur Herstellung eines polymeren Komposits gemäß der Ansprüche 6 bis 9.

15. Verfahren zur Herstellung eines polymeren Komposits,
wobei das Komposit aus einer polymeren Nanodispersion, die durch Eindispergierung eines Nanopulvers in organische Matrices erhalten wird, durch eine Polymerisation und/oder Polyaddition und/oder Polykondensation erhältlich ist, **dadurch gekennzeichnet, dass** vor und/oder nach der Aushärtung der polymeren Nanodispersion eine Temperung erfolgt.

16. Verfahren nach Anspruch 15, **dadurch gekennzeichnet, dass** vor und/oder nach der Polymerisation und/oder Polyaddition und/oder Polykondensation zum Komposit eine Temperung im Bereich von 1 s bei 800°C bis 156 h bei 30°C erfolgt, wobei eine Temperung der Nanodispersion über ca. 10 min bei ca. 110°C besonders bevorzugt ist.

17. Verfahren nach Anspruch 15, **dadurch gekennzeichnet, dass** die Partikel des Nanopulvers durch
(i) in Fällungsreaktionen aus Metallalkoholat-Lösungen mit Carbonsäuren,
(ii) durch doppelte Umsetzung zwischen Metallsalzen und Carbonsäuresalzen
(iii) oder aus einer Verdrängungsreaktion zwischen Metallsalzen schwächerer und/oder leichter flüchtigen Carbonsäuren (z.B. Metallacetate) und stärkeren und/oder weniger flüchtigen Carbonsäuren gewonnen,
wobei die Oberfläche des Nanopulvers durch eine heterogene hydrolytische Kondensation mit funktionalisierten Mono-, Di- oder Trialkoxy-Silanen mit einer Polysiloxanhülle unter Ausbildung von kovalenten
Me-O-Si-Bindungen belegt ist, gewonnen werden, wobei die Oberfläche des Nanopulvers durch eine heterogene hydrplytische Kondensation mit funktionalisierten Mono-,
Di- oder Trialkoxy-Silanen mit einer Polysiloxanhülle unter Ausbildung von kovalenten Me-O-Si-Bindungen belegt ist.

18. Verfahren nach Anspruch 15, **dadurch gekennzeichnet**, die Herstellung eines Nanopulvers durch Fällungsreaktionen aus Metallalkoholat-Lösungen mit Carbonsäuren erfolgt.

19. Verfahren nach Anspruch 15, **dadurch gekennzeichnet, dass** die Partikel des Nanopulvers in reaktive organische Matrices eindispergiert werden.

20. Verfahren nach Anspruch 15, **dadurch gekennzeichnet, dass** das Komposit durch Bulk-Polymerisation, und/oder - Polyaddition und/oder- Polykondensation, Suspensions-Polymerisation und/oder -Polyaddition und/ oder-Polykondensation, Emulsions-Polymerisation und/oder - Polyaddition und/ oder- Polykondensation oder durch eine Polymerisation und/oder Polyaddition und/ oder Polykondensation in Lösung erhalten wird.

21. Polymeres Komposit, erhältlich durch ein Verfahren gemäß Anspruch 15, zumindest umfassend Nanopulver mit der Zusammensetzung
MeᵢOⱼ(OH)ₖ[(OOC)ₗ-Rₘ]ₙ
mit i=1-20, j=0-40, k=0-80, l=1-80, m=1-80, n=1-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind,
wobei die Oberfläche des Nanopulvers mit einer Polysiloxanhülle belegt ist, die durch eine heterogene hydrolytische Kondensation mit funktionalisierten Mono-, Di- oder Trialkoxy-Silanen unter Ausbildung von kovalenten Me-O-Si - Bindungen entstanden ist,
und reaktive Matrices, wobei die Partikel des Nanopulvers chemisch reaktive Gruppen enthalten, die mit den reaktiven Matrices unter Ausbildung von kovalenten oder nichtkovalenten Bindungen reagieren, oder chemisch nicht reaktive Gruppen enthalten, die mit den reaktiven Matrices nicht unter Ausbildung von Bindungen reagiert.

22. Komposit gemäß Anspruch 21, **dadurch gekennzeichnet, dass** die Carboxylat-Funktionalisierungen beispielsweise C-C, C-H, C=O, C-O-C, C=C, C≡C, C₆H₅, C₆H₁₃, OH, NH₂, SH, SO₃H, NCO, NCS, CHO, CHS oder COOH Gruppen enthalten.

23. Komposit gemäß Anspruch 21, **dadurch gekennzeichnet, dass** die Oberflächenmodifizierung des Nanopulvers mit organofunktionellen Silanen sowohl bei der Präparation des Nanopulvers selbst als auch in beliebigen reaktiven Matrices erfolgt.

24. Komposit gemäß Anspruch 21, **dadurch gekennzeichnet, dass** die mittlere Primärteilchengröße der Partikel im Bereich von ca. 1 bis 300 nm liegt.

25. Komposit gemäß Anspruch 21, **dadurch gekennzeichnet, dass** das Nanopulver die Struktur Me₂(OH)₄[OOC-R-COO] mit Me = Al und R = CH=CH bei gegebener Z-Konfiguration der Carboxylat-Gruppen besitzt.

26. Komposit gemäß Anspruch 21, **dadurch gekennzeichnet, dass** zusätzlich 1 bis 60 Ma.% an anorganischen Mikropartikeln mit einer mittleren Teilchengröße der Partikel von 1-2000 µm enthalten sind.

27. Komposit gemäß Anspruch 21, **dadurch gekennzeichnet, dass** das Komposit durch Einwirkung von Elektronen, von γ-oder Röntgenstrahlung, von mechanischer Energie, durch UV-Strahlung oder sichtbarem Licht unter zusätzlichen Einsatz von radikalischen und/oder ionischen Photoinitiatoren, oder von thermischer Energie, besonders bevorzugt unter zusätzlichem Einsatz von radikalischen Thermoinitiatoren, und/oder Katalysatoren auf die Nanodispersion erhalten wird.

28. Komposit gemäß Anspruch 21, **dadurch gekennzeichnet, dass** das Komposit durch Bulk-Polymerisation, und/oder - Polyaddition und/oder- Polykondensation, Suspensions-Polymerisation und/oder -Polyaddition und/ oder-Polykondensation, Emulsions-Polymerisation und/oder-Polyaddition und/ oder- Polykondensation oder durch eine Polymerisation und/oder Polyaddition und/ oder Polykondensation in Lösung erhalten wird.

29. Komposit gemäß Anspruch 21, **dadurch gekennzeichnet, dass** das Massenverhältnis Nanopartikel : Polysiloxanhülle im Bereich von 99:1 bis 1:5 liegt, vorzugsweise im Bereich von 50:1 bis 40:1.

30. Nanodispersion, eingesetzt im Verfahren gemäß Anspruch 15, zumindest umfassend ein Nanopulver mit der Zusammensetzung
MeᵢOⱼ(OH)ₖ[(OOC)ₗ-Rₘ]ₙ
mit i=1-20, j=0-40, k=0-80, l=1-80, m=1-80, n=1-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind,
wobei im Partikelkern und an der Partikeloberfläche immer Liganden (OOC)ₗ-Rₘ vorhanden sind; wobei im Partikelkern und an der Partikeloberfläche das Molverhältnis Me : (OOC)ₗ-Rₘ) im Bereich von 20 : 1 bis 1 : 4 vorliegt;
wobei die Oberfläche des Nanopulvers mit einer Polysiloxanhülle belegt ist, die durch eine heterogene hydrolytische Kondensation mit funktionalisierten Mono-, Di- oder Trialkoxy-Silanen unter Ausbildung von kovalenten Me-O-Si - Bindungen entstanden ist, und reaktive Matrices, wobei die Partikel des Nanopulvers chemisch reaktive Gruppen enthalten, die mit den reaktiven Matrices unter Ausbildung von kovalenten oder nichtkovalenten Bindungen reagieren, oder chemisch nicht reaktive Gruppen enthalten, die mit den reaktiven Matrices nicht unter Ausbildung von Bindungen reagiert.

## Claims

1. Organometallic nanopowders of the composition
**MeᵢOⱼ(OH)ₖ[(OOC)ₗ-Rₘ]ₙ**
where i = 1-20, j = 0-40, k = 0-80, l = 1-80, m = 1-80, n = 1-80; where the metal atoms Me are derived from the first five main groups, the eight transition element groups or the lanthanides, R being hydrogen atoms and/or any organic residues,
and
these hydrogen atoms and/or these organic residues being able to be intercombined, wherein/**characterized by** the fact that
there are (OOC)ₗ-Rₘ ligands within the particle cores and at the particle surfaces of the nanopowder, and that there is a molar ratio of Me: (OOC)ₗ-Rₘ) in the range from 20:1 to 1:4 within the particle core and at the particle surface.

2. Nanopowders according to claim 1, wherein the mean primary particle size of the particles is in the range from approx. 1 to 300 nm.

3. Nanopowders according to claim 1, wherein the structure as regards the particle core and the particle surface is intrinsic.

4. Nanopowders according to claim 1, wherein the nanopowder is of the structure Me₂(OH)₄[OOC-R-COO], where Me = Al and R = CH=CH with a given Z configuration of carboxylate groups.

5. Nanodispersion, at least containing a nanopowder according to claims 1 to 4 and reactive organic matrices.

6. Polymeric composite, at least comprising nanopowders of the composition according to claims **1** to **4,** and reactive matrices, where the particles of the nanopowder contain chemically reactive groups that react with the reactive matrices by forming chemical bonds, or where they contain chemically inert groups which do not react with the reactive matrices by forming bonds.

7. Polymeric composite according to claim **6**, wherein the composite contains an additional 1 to 80 wt. % of inorganic microparticles of a mean particle size of particles of 1-2000 µm.

8. Polymeric composite according to claim **6**, wherein the composite is obtained by the impact of electrons, UV or visible light irradiation, of gamma or X-rays, by the application of mechanical energy, by the additional use of radical and/or ionic photo-initiators, or of thermal energy, and by the additional use of radical thermo-initiators and/or catalysts by particular preference.

9. Polymeric composite according to claim **6**, wherein the composite is obtained by bulk polymerisation, and/or bulk polyaddition, and/or bulk polycondensation, suspension polymerisation, and/or suspension polyaddition, and/or suspension polycondensation, emulsion polymerisation, and/or emulsion polyaddition, and/or emulsion polycondensation, or by a polymerisation and/or polyaddition and/or polycondensation in solution.

10. Procedure for producing a nanopowder of any composition according to claims **1** to **4**,
where the particles are obtained by
(I) in precipitation reactions from metal alcoholate solutions with carboxylic acids,
(II) by the double conversion between metal salts and carboxylic acid salts, or
(III) from an elimination reaction between metal salts of some weaker and/or more volatile carboxylic acids (e.g. metal acetates) on the one hand and, on the other, stronger and/or less volatile carboxylic acids.

11. Procedure according to claim **10**, wherein the production of a nanopowder results from a precipitation reaction of a metal alcoholate solution with carboxylic acids.

12. Procedure according to claim **10**, wherein the production of a nanopowder results from a one-step procedure or in one single synthesis step, respectively.

13. Procedure for producing a polymeric nanodispersion according to claim **5**, where at least some nanopowder is dispersed.

14. Procedure for producing a polymeric composite according to claims **6** to **9**.

15. Procedure for producing a polymeric composite, where the composite can be obtained from a polymeric nanodispersion which is obtained by dispersing a nanopowder into organic matrices, by polymerisation and/or polyaddition and/or polycondensation, wherein annealing occurs before and/or after the cure of the polymeric nanodispersion.

16. Procedure according to claim **15**, wherein annealing in the range from 1 s at 800°C to 156 h at 30°C occurs before and/or after polymerisation and/or polyaddition and/or polycondensation into the composite, where annealing of the nanodispersion over a period of approx. 10 min at approx. 110°C is particularly preferred.

17. Procedure according to claim **15**, wherein the particles of the nanopowder are obtained by
(I) in precipitation reactions from metal alcoholate solutions with carboxylic acids,
(II) by double conversion between metal salts and carboxylic acid salts
(III) or from an displacement reaction between metal salts of weaker and/or more volatile carboxylic acids (e.g. metal acetates) and stronger and/or less volatile carboxylic acids,
where the surface of the nanopowder is occupied by a polysiloxane coat produced by a heterogeneous hydrolytic condensation with functionalised monoalcoxy, dialcoxy or trialcoxy silanes , by forming covalent Me-O-Si bonds.

18. Procedure according to claim **15**, wherein the production of the nanopowder results from precipitation reactions of metal alcoholate suspensions with carboxylic acids.

19. Procedure according to claim **15**, wherein the particles of the nanopowder are dispersed into reactive organic matrices.

20. Procedure according to claim **15**, wherein the composite is obtained by bulk polymerisation, and/or bulk polyaddition, and/or bulk polycondensation, suspension polymerisation, and/or suspension polyaddition, and/or suspension polycondensation, emulsion polymerisation, and/or emulsion polyaddition, and/or emulsion polycondensation, or a polymerisation, and/or polyaddition, and/or polycondensation in solution.

21. Polymeric composite, obtainable by a procedure according to claim 15, at least comprising nanopowder of the composition
MeᵢOⱼ(OH)ₖ[(OOC)ₗ-Rₘ]ₙ
where i = 1-20, j = 0-40, k = 0-80, l = 1-80, m = 1-80, n = 1-80; where the metal atoms Me are derived from the first five main groups, the eight transition element groups or the lanthanides, R are hydrogen atoms and/or any organic residues,
and
these hydrogen atoms and/or these organic residues being able to be intercombined,
where the surface of the nanopowder is occupied by a polysiloxane coat produced by a heterogeneous hydrolytic condensation with functionalised monoalcoxy, dialcoxy or trialcoxy silanes, by forming covalent Me-O-Si bonds,
and reactive matrices, where the particles of the nanopowder contain chemically reactive groups that react with the reactive matrices forming covalent or non-covalent bonds, or where they contain inert groups that do not react with the reactive matrices forming bonds.

22. Composite according to claim **21**, wherein the carboxylate functionalisations contain, for instance, C-C, C-H, C=O, C-O-C, C=C, C=C, C₆H₅, C₆H₁₃, OH, NH₂, SH, SO₃H, NCO, NCS, CHO, CHS or COOH groups.

23. Composite according to claim **21**, wherein the surface modification of the nanopowder with organofunctional silanes results from both the preparation of the nanopowder itself and in reactive matrices of any kind.

24. Composite according to claim **21**, wherein the mean primary particle size of the particle is in the range from approx. 1 to 300 nm.

25. Composite according to claim **21**, wherein the nanopowder is of the structure Me₂(OH)₄[OOC-R-COO], with Me = Al and R = CH = CH at a given Z configuration of the carboxylate groups.

26. Composite according to claim **21**, wherein it contains an additional 1 to 60 wt. % of inorganic microparticles of a mean particle size of particles of 1-2000 µm.

27. Composite according to claim **21**, wherein the composite is obtained by impact of electrons, of gamma or X-rays, by application of mechanical energy, by UV or visible light irradiation, by the additional employment of radical and/or ionic photo-initiators or of thermal energy, by the additional use of radical thermo-initiators and/or catalysts by particular preference, on the nanodispersion.

28. Composite according to claim **21**, wherein the composite is obtained by bulk polymerisation, and/or bulk polyaddition, and/or bulk polycondensation, by suspension polymerisation, and/or suspension polyaddition, and/or suspension polycondensation, by emulsion polymerisation, and/or emulsion polyaddition, and/or emulsion polycondensation, or by a polymerisation, and/or polyaddition, and/or polycondensation in solution.

29. Composite according to claim **21**, wherein the nanoparticle:polysiloxane coat mass ratio is within the range from 99:1 to 1:5, and preferably within the range from 50:1 to 40:1.

30. Nanodispersion, employed in the procedure according to claim **15**, at least comprising a nanopowder of the composition
MeᵢOⱼ(OH)ₖ[(OOC)ₗ-Rₘ]ₙ
where i = 1-20, j = 0-40, k = 0-80,1= 1-80, m = 1-80, n = 1-80; where the metal atoms Me are derived from the first five main groups, the eight transition element groups or the lanthanides, R are hydrogen atoms and/or any organic residues,
and
these hydrogen atoms and/or these organic residues are capable of being intercombined,
wherein there are always (OOC)ₗ-Rₘ ligands within the particle cores and at the particle surfaces of the nanopowder, and that there is a molar ratio of Me:(OOC)ₗ-Rₘ in the range from 20:1 to 1:4 within the particle core or at the particle surface;
where the surface of the nanopowder is occupied by a polysiloxane coat produced by a heterogeneous hydrolytic condensation with functionalised monoalcoxy, dialcoxy or trialcoxy silanes by forming covalent Me-O-Si bonds, and reactive matrices, where the particles of the nanopowders contain chemically reactive groups that react with the reactive matrices forming covalent or non-covalent bonds, or contain inert groups that do not react with the reactive matrices forming bonds.

## Revendications

1. Nanopoudre organo-métallique de la composition
**MeᵢOⱼ(OH)ₖ[(OOC)ₗ-Rₘ]ₙ**
avec i = 1-20, j = 0-40, k = 0-80,1= 1-80, m = 1-80, n = 1-80, les atomes métalliques Me étant dérivés soit des cinq premiers groupes principaux, soit des huit sous-groupes ou des lanthanides, R étant des atomes d'hydrogène et/ou n'importe quels autres résidus organiques,
et
ces atomes d'hydrogène et/ou ces résidus organiques étant capables d'être combinés entre eux,
**caractérisé en ce**
**qu'**il y a des ligands (OOC)ₗ-Rₘ existants au coeur de la particule et à la surface des particules du nanopoudre, et que la relation molaire de Me: (OOC)ₗ-Rₘ) au coeur de la particule et à la surface des particules se trouve dans la plage de 20:1 à 1:4.

2. Nanopoudre selon la revendication 1, **caractérisé en ce que** la taille des particules primaires des particules se trouve dans la plage d'environ 1 à 300 nm.

3. Nanopoudre selon la revendication 1, **caractérisé en ce que** la structure concernant le coeur de particule et la surface des particules est intrinsèque.

4. Nanopoudre selon la revendication 1, **caractérisé en ce que** le nanopoudre a la structure Me₂(OH)₄[OOC-R-COO], avec Me = Al et R = CH=CH avec une configuration donné Z des groupes carboxylates.

5. Nanodispersion, au moins comprenant un nanopoudre selon les revendications 1 à 4 et des matrices organiques réactives.

6. Composite polymérique, au moins comprenant du nanopoudre ayant la composition décrite aux revendications 1 à 4 et des matrices réactives, les particules du nanopoudre comprenant des groupes chimiquement réactifs, et ces derniers réagissant avec les matrices réactives et par ceci forment des liaisons soit covalentes soit non-covalentes, ou comprenant des groupes qui ne sont pas réactifs sur le plan chimique et qui ne réagissent pas, en formant des liaisons, avec les matrices réactives.

7. Composite polymérique selon la revendication **6**, **caractérisé en ce que** le composite comprend en plus 1 à 80 pour cent en poids de microparticules inorganiques d'une taille moyenne des particules de 1 à 2000 µm.

8. Composite polymérique selon la revendication **6**, **caractérisé en ce que** le composite est obtenu soit par l'action des électrons, du rayonnement ultraviolet ou de la lumière visible, des rayons X, soit par le dépôt d'énergie mécanique, d'une part, en utilisant en plus des photoinitiateurs radicaliques et/ou ioniques, ou d'autre part, de l'énergie thermique, en utilisant en outre, de préférence particulière, des thermoinitiateurs radicaliques et/ou des catalysateurs sur la nanodispersion.

9. Composite polymérique selon la revendication **6**, **caractérisé en ce que** le composite est obtenu soit par polymérisation en masse, et/ou polyaddition en masse et/ou polycondensation en masse, soit par polymérisation à suspension et/ou polyaddition à suspension et/ou polycondensation à suspension, soit par polymérisation à émulsion et/ou polyaddition à émulsion, et/ou polycondensation à émulsion, soit par une polymérisation en solution et/ou polyaddition en solution et/ou polycondensation en solution.

10. Procédé pour la fabrication d'un nanopoudre ayant une composition selon les revendications 1 à 4, les particules étant obtenues par
(I) des réactions de précipitation à partir de solutions d'alcoolate métallique avec des acides carboxyliques,
(II) double conversion entre les sels métalliques et les sels d'acides carboxyliques, ou
(III) par une réaction de déplacement entre, d'une part, des sels métalliques dérivés des acides carboxyliques plus faibles et/ou plus facilement volatiles (par ex. acétates métalliques) et des acides carboxyliques plus forts et/ou des acides carboxyliques moins facilement volatiles.

11. Procédé selon la revendication **10**, **caractérisé en ce que** la fabrication d'un nanopoudre se réalise par des réactions de précipitation à partir des solutions d'alcoolate métallique avec des acides carboxyliques.

12. Procédé selon la revendication **10**, **caractérisé en ce que** la fabrication d'un nanopoudre se réalise par un procédé rapide à une seule étape ou avec une seule étape de synthèse.

13. Procédé pour la fabrication d'une nanodisperson polymérique selon la revendication **5**, **caractérisé en ce qu'**au moins le nanopoudre est dispersé.

14. Procédé pour la fabrication d'un composite polymérique selon les revendications **6** à **9**.

15. Procédé pour la fabrication d'un composite polymérique, le composite pouvant être obtenu par une nanodisperson polymérique, qui est obtenu soit par la dispersion d'un nanopoudre dans des matrices organiques, soit par une polymérisation et/ou polyaddition et/ou polycondensation, **caractérisé en ce qu'**un recuit se realise avant et/ou après le fixage de la nanodisperson polymérique.

16. Procédé selon la revendication **15**, **caractérisé en ce qu'**un recuit se realise, avant et/ou après la polymérisation et/ou polyaddition et/ou polycondensation par laquelle le composite est obtenu, dans le domaine de 1 s à 800°C à 156 hrs à 30°C, le recuit de la nanodispersion se réalisant, de preference particulière, durant env. 10 min à env. 110°C.

17. Procédé selon la revendication **15**, **caractérisé en ce que** les particules du nanopoudre sont obtenu par
(I) des réactions de précipitation à partir de solutions d'alcoolate métallique avec des acides carboxyliques,
(II) double conversion entre les sels métalliques et les sels d'acides carboxyliques,
(III) ou par une réaction de déplacement entre des sels métalliques dérivés des acides carboxyliques plus faibles et/ou plus facilement volatiles (par ex. acétates métalliques) et des acides carboxyliques plus forts et/ou des acides carboxyliques moins facilement volatiles,
la surface du nanopoudre étant occupée par un revêtement en polysiloxane produit par une condensation hydrolytique hétérogène avec des silanes monoalcoxy, dialcoxy ou trialcoxy fonctionnalisés, en formant des liaisons Me-O-Si covalentes.

18. Procédé selon la revendication **15**, **caractérisé en ce que** un nanopoudre est fabriqué par des réactions de précipitation à partir de solutions d'alcoolate métallique avec des acides carboxyliques.

19. Procédé selon la revendication **15**, **caractérisé en ce que** les particules du nanopoudre sont dispersées dans des matrices organiques réactives.

20. Procédé selon la revendication **15**, **caractérisé en ce que** le composite est obtenu soit par polymérisation en masse, et/ou polyaddition en masse et/ou polycondensation en masse, soit par polymérisation à suspension et/ou polyaddition à suspension et/ou polycondensation à suspension, soit par polymérisation à émulsion et/ou polyaddition à émulsion, et/ou polycondensation à émulsion, soit par une polymérisation en solution et/ou polyaddition en solution et/ou polycondensation en solution.

21. Composite polymérique, qui peut être obtenu avec un procédé selon la revendication **15**, au moins comprenant du nanopoudre de la composition
MeᵢOⱼ(OH)ₖ[(OOC)ₗ-Rₘ]ₙ
avec i = 1-20, j = 0-40, k = 0-80, l = 1-80, m = 1-80, n = 1-80, les atomes métalliques Me étant dérivés soit des cinq premiers groupes principaux, soit des huit sous-groupes ou des lanthanides, R étant des atomes d'hydrogène et/ou n'importe quels autres résidus organiques, et
ces atomes d'hydrogène et/ou ces résidus organiques étant capables d'être combinés entre eux,
la surface du nanopoudre étant occupée par un revêtement en polysiloxane produit par une condensation hydrolytique hétérogène avec des silanes monoalcoxy, dialcoxy ou trialcoxy fonctionnalisés, en formant des liaisons Me-O-Si covalentes,
et des matrices réactives, les particules du nanopoudre comprenant des groupes chimiquement réactifs, et ces derniers réagissant avec les matrices réactives et par ceci formant des liaisons soit covalentes soit non-covalentes, ou comprenant des groupes qui ne sont pas réactifs sur le plan chimique et qui ne réagissent pas, en formant des liaisons, avec les matrices réactives.

22. Composite selon la revendication **21**, **caractérisé en ce que** les fonctionnalisations comprennent, par exemple, des groupes C-C, C-H, C=O, C-O-C, C=C, C≡C, C₆H₅, C₆H₁₃, OH, NH₂, SH, SO₃H, NCO, NCS, CHO, CHS ou COOH.

23. Composite selon la revendication **21**, **caractérisé en ce que** la modification de surface du nanopoudre se réalise avec des silanes organofonctionnels lors de la préparation du nanopoudre même ainsi que dans n'importe quelles matrices réactives.

24. Composite selon la revendication **21**, **caractérisé en ce que** la taille moyenne des particules primaires des particules se trouve dans la plage d'environ 1 à 300 nm.

25. Composite selon la revendication **21**, **caractérisé en ce que** le nanopoudre a la structure Me₂(OH)₄[OOC-R-COO], avec Me = Al et R = CH=CH avec une configuration donné Z des groupes carboxylates.

26. Composite selon la revendication **21**, **caractérisé en ce que** according to claim **21**, que le composite comprend en plus 1 à 60 pour cent en poids de microparticules inorganiques d'une taille moyenne des particules de 1 à 2000 µm.

27. Composite selon la revendication **21**, **caractérisé en ce que** le composite est obtenu soit par l'action des électrons, du rayonnement ultraviolet ou de la lumière visible, des rayons X, soit par le dépôt d'énergie mécanique, d'une part, en utilisant en plus des photoinitiateurs radicaliques et/ou ioniques, ou d'autre part, de l'énergie thermique, en utilisant en outre, de préférence particulière, des thermoinitiateurs radicaliques et/ou des catalysateurs sur la nanodispersion.

28. Composite selon la revendication **21**, **caractérisé en ce que** le composite obtenu soit par polymérisation en masse, et/ou polyaddition en masse et/ou polycondensation en masse, soit par polymérisation à suspension et/ou polyaddition à suspension et/ou polycondensation à suspension, soit par polymérisation à émulsion et/ou polyaddition à émulsion, et/ou polycondensation à émulsion, soit par une polymérisation en solution et/ou polyaddition en solution et/ou polycondensation en solution.

29. Composite selon la revendication **21**, **caractérisé en ce que** la relation de masse nanoparticule:revêtement en polysiloxane se trouve dans la plage de 99:1 à 1:5, et de préférence dans la plage de 50:1 à 40:1.

30. Nanodispersion, utilisée dans le procédé selon la revendication **15**, comprenant, au moins, un nanopoudre de la composition
MeᵢOⱼ(OH)ₖ[(OOC)ₗ-Rₘ]ₙ
avec i = 1-20, j = 0-40, k = 0-80, l = 1-80, m = 1-80, n = 1-80, les atomes métalliques Me étant dérivés soit des cinq premiers groupes principaux, soit des huit sous-groupes ou des lanthanides, R étant des atomes d'hydrogène et/ou n'importe quels autres résidus organiques,
et
ces atomes d'hydrogène et/ou ces résidus organiques étant capables d'être combinés entre eux,
des ligands (OOC)ₗ-Rₘ existants au coeur de la particule et à la surface des particules du nanopoudre, et la relation molaire de Me: (OOC)ₗ-Rₘ) au coeur de la particule et à la surface des particules se trouvant dans la plage de 20:1 à 1:4 ;
la surface du nanopoudre étant occupée par un revêtement en polysiloxane produit par une condensation hydrolytique hétérogène avec des silanes monoalcoxy, dialcoxy ou trialcoxy fonctionnalisés, en formant des liaisons Me-O-Si covalentes,
et des matrices réactives, les particules du nanopoudre comprenant des groupes chimiquement réactifs, et ces derniers réagissant avec les matrices réactives et par ceci formant des liaisons soit covalentes soit non-covalentes, ou comprenant des groupes qui ne sont pas réactifs sur le plan chimique et qui ne réagissent pas, en formant des liaisons, avec les matrices réactives.
